(19) Europäisches Patentamt
European Patent Office
Office européen des brevets

(11) EP 0 896 030 B1

# (12) EUROPÄISCHE PATENTSCHRIFT

(45) Veröffentlichungstag und Bekanntmachung des Hinweises auf die Patenterteilung:
**06.02.2002 Patentblatt 2002/06**

(51) Int Cl.$^7$: **C08L 59/00**

(21) Anmeldenummer: **98114487.6**

(22) Anmeldetag: **01.08.1998**

## (54) Polyoxymethylen-Formmassen mit verbesserter Thermostabilität und Verfärbungsstabilität

Polyoxymethylene moulding composition showing an improved colour- and heat stability

Composition à mouler à base de polyoxymethylène ayant une thermostabilité et une stabilité à la coloration améliorées

(84) Benannte Vertragsstaaten:
**AT BE CH CY DE DK ES FI FR GB GR IE IT LI NL PT SE**

(30) Priorität: **08.08.1997 DE 19734360**

(43) Veröffentlichungstag der Anmeldung:
**10.02.1999 Patentblatt 1999/06**

(73) Patentinhaber: **BASF AKTIENGESELLSCHAFT**
**67056 Ludwigshafen (DE)**

(72) Erfinder:
- **Keller, Bruno, Dr.**
  **55263 Wackernheim (DE)**
- **Schauhoff, Stephanie, Dr.**
  **60385 Frankfurt (DE)**
- **Dorn, Klaus, Dr.**
  **63457 Hanau (DE)**
- **Alt, Hartmut**
  **63636 Brachttal (DE)**
- **Michelchen, Dietrich**
  **63526 Erlensee (DE)**

(56) Entgegenhaltungen:
**EP-A- 0 329 028**
**EP-A- 0 381 943**
**DE-B- 1 128 654**
**US-A- 3 219 727**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 896 030 B1

## Beschreibung

Die Erfindung betrifft verstärkte oder unverstärkte Polyoxymethylen-Formmassen mit verbesserter Thermostabilität und Verfärbungsstabilität, Formkörper hieraus sowie ein Verfahren zur Herstellung von verstärkten oder unverstärkten Polyoxymethylen-Formmassen mit verbesserter Thermostabilität und Verfärbungsstabilität durch Verwendung bestimmter Additive. Insbesondere bezieht sich die Erfindung auf verstärkte oder unverstärkte Polyoxymethylen-Formmassen aus

(i) mindestens einem Polyoxymethylen-Homo- und/oder Copolymerisat,

(ii) mindestens einem üblichen Additiv und

(iii) mindestens einem polymeren Kunststoffmaterial zur Verbesserung der Thermostabilität und der Verfärbungsstabilität.

Polyoxymethylen (Polyacetal) ist ein ausgezeichneter Werkstoff, aus dem sich insbesondere durch Spritzguß die unterschiedlichsten Gebrauchsgegenstände herstellen lassen. Von Vorteil ist dabei insbesondere die chemische Resistenz gegen viele organische Lösungsmittel sowie Basen. Seit der Markteinführung der Polyacetale wurden vielfältig Versuche unternommen, die Eigenschaften von Polyoxymethylen (POM) gezielt zu verbessern, so daß sein technisches Anwendungsspektrum weiter verbreitert werden konnte.

Insbesondere eignen sich Polyoxymethylen-Homo- und/oder Copolymerisate für die Herstellung von verstärkten oder unverstärkten Formmassen. Um deren Verarbeitbarkeit und thermische Stabilität zu verbessern, werden die Polyoxymethylen-Homo- und/oder Copolymerisate mit üblichen Additiven sowie mindestens einem Additiv zur Verbesserung der Thermostabilität vermischt.

Zum näheren Stand der Technik werden folgende Druckschriften genannt, in welchen polymere Kunststoffmaterialien als Zusatz zu POM vorgeschlagen werden, um so dessen thermische Stabilität zu optimieren:

US-A-2 993 025 (synthetische Polyamide),
US-A-3 204 014 (N-Vinylpyrrolidon/Acrylamid-Copolymere),
US-A-3 210 322 (Carboxylgruppen enthaltende Polyamide, Polyurethane, substituierte Polyacrylamide, Polyvinylpyrrolidone und Hydrazine),
US-A-3 215 671 ((Meth)acrylate und (Meth)acrylamide als Vernetzer),
US-A-4 464 435 (Copolymere von Polyestern, (Meth)acrylaten, (Meth)acrylamiden, Triallylcyanurat, Diallylphthalat, Vinylacetat und Divinylbenzol),
JP-B-14329/68 (Copolymere von Acrylamid oder Acrylamidderivaten mit Acrylalkylestern, Vinylethern oder Vinylketonen oder Copolymere von Acrylamidderivaten und Styrol),
US-A-3 960 984 (Amidoligomer),
US-A-4 098 843 (Dispersion eines Polyamids in einem Trägerharz),
JP-B-22669/68 (Ethylen/Vinylacetat-Copolymere),
EP-A-0 245 962 (Polymere und/oder Oligomere, welche Hydroxygruppen und mindestens eine weitere funktionelle Gruppe mit einer stärkeren Lewis-Basizität als die Hydroxygruppe enthalten),
BE-A-722 268 (Polyamide, Polyurethane, Polyharnstoffe, Polyvinylpyrrolidon, Poly(meth)acrylamid, Harnstoffderivate, Amide, Hydrazone, Semicarbazone und Alkylen-bis-phenole),
JP-B-17107/67 (Copolymerisat von Acrylamid mit Styrol oder Vinylnaphthalin),
EP-A-0 270 278 (Gemisch aus einem Superpolyamid und einer geringen Menge eines Übergangsmetallsalzes),
EP-A-0 270 279 (Gemisch aus einem Superpolyamid und einer geringen Menge einer cyclischen Amidinverbindung) und
DE-B-25 40 207 (Fällungspolykondensat aus Formaldehyd und Melamin im Molverhältnis zwischen 1,2 : 1 und 10 : 1).

Darüber hinaus ist es bekannt, Vinylpolymere mit Amid- oder Lactamgruppen zur Verbesserung der Thermostabilität zu verwenden.

Aus der EP-A-0 381 943 sind Polyoxymethylen-Formmassen bekannt, die als Additiv entweder

a) ein Polymer aus

a1) Methyl-, Ethyl- und/oder n-Propylmethacrylat
a2) n-Propyl-, n-Butyl- und/oder Pentylacrylat und

a3) Acrylamid und/oder Methacrylamid

enthalten oder

b) ein Gemisch aus

b1) Polymethylmethacrylat
b2) Poly(n-Butylacrylat) und
b3) Polymethacrylamid.

Es handelt sich bei den polymeren Zusatzstoffen gemäß der EP-A-0 381 943 damit um Copolymerisate, die gemäß den in der EP-A-0 381 943 angegebenen Vorschriften entweder auf dem Wege der Emulsionspolymerisationsmethode oder nach der Suspensions-Perl-Polymerisationsmethode erhalten werden.

Allein schon die Vielzahl der bislang vorgeschlagenen Additive läßt erkennen, daß das Problem der Verbesserung der Thermostabilität von verstärkten oder unverstärkten Polyoxymethylen-Formmassen noch nicht zur vollen Zufriedenheit der Praxis gelöst werden konnte. Noch immer weisen bekannte Polyoxymethylen-Formmassen für einige Anwendungen eine nicht ausreichende thermische Stabilität auf, welche die Verarbeitung zu Formkörpern nachteilig beeinflußt und beispielsweise zu Ablagerungen am Formwerkzeug oder zur Verschlechterung der Entformbarkeit beiträgt und/oder beim späteren Gebrauch der Formkörper zu Verfärbungen und zur Verminderung der mechanischen Eigenschaften führt. Nachteilig ist ferner, daß in den bisher bekannten Polyoxymethylen-Formmassen noch Formaldehydaddukte enthalten sein können, welche bei der Verarbeitung bei erhöhten Temperaturen durch Formaldehydabspaltung zu Geruchsbelästigungen führen.

Selbst die neueren, beispielsweise in der EP-A 0 381 943 vorgeschlagenen Additive auf Basis eines Copolymerisats oder Blends aus (Meth)acrylat/(Meth)acrylamid, fanden bislang nicht den Weg in die Praxis, da die in Polyoxymethylen-Formmassen eingearbeiteten Emulsionspolymerisate vermutlich keine reproduzierbaren Ergebnisse bezüglich der thermischen Stabilisierung zeigten. Zudem führen die im Emulsionspolymerisat, welches zur Stabilisierung des POM dienen soll, verbliebenen Hilfsstoffe bei üblichen Polyoxymethylen-Formmassen-Verarbeitungtemperaturen von größer 200°C zu Verfärbungen oder gar zur Zersetzung der Polyoxymethylen-Formmasse.

Angesichts des hierin angegebenen und dargelegten Standes der Technik war es mithin Aufgabe der Erfindung, verstärkte oder unverstärkte Polyoxymethylen-Formmassen für die technische Produktion bereitzustellen, welche den bislang in der Praxis eingesetzten POM-Formmassen überlegen sind. Insbesondere sollen die neuen POM-Formmassen über

- eine höhere Thermostabilität,
- eine geringere Verfärbungsneigung,
- einen geringeren Restformaldehydgehalt,

verfügen als bislang bekannte POM-Formmassen. Schließlich wird auch angestrebt, diese "Grundstabilisierung" nach Möglichkeit mit einem einzigen Additiv zu erreichen, was zudem einfach und kostengünstig herstellbar sein soll.

Gelöst werden diese sowie weitere nicht näher dargelegte Aufgaben durch eine Polyoxymethylen-Formmasse der eingangs angegebenen Gattung mit den Merkmalen des kennzeichnenden Teils des Anspruchs 1. Vorteilhafte Ausgestaltungen sind Gegenstand der auf Anspruch 1 rückbezogenen Ansprüche. Im Hinblick auf die Verfahrensaspekte löst die in Anspruch 14 wiedergegebene technische Lehre die Probleme der Erfindung. Zweckmäßige Verwendungen werden in den Ansprüchen 15 und 16 unter Schutz gestellt.

Dadurch, daß als Additiv (iii) zur Verbesserung der Thermostabilität ein Copolymerisat eingesetzt wird, welches durch Polymerisation in Substanz einer Mischung von

A) 60 - 90 Teilen ein oder mehrerer (Meth)acrylate,

B) 10 - 40 Teilen ein oder mehrerer (Meth)acrylamide,

C) bezogen auf 100 Teile A) + B) > 0,2 bis 5 Teilen Molekulargewichtsregler und

D) bezogen auf 100 Teile A) + B) bis zu 2 Teilen lipophile radikalische Polymerisationsinitiatoren,

erhältlich ist,

und daß

(iii) in einer Menge von 0,01 bis 2 Teilen bezogen auf die Summe von (i) + (ii)

in der Formmasse enthalten ist,

wobei sich alle Mengen auf Gewichtsteile (wt/wt) beziehen und A) und B) zusammen 100 Teile ergeben müssen,

gelingt die Lösung der der Erfindung zugrundeliegenden Probleme in nicht ohne weiteres vorhersehbarer Weise.

So bietet die erfindungsgemäße verstärkte oder unverstärkte Formmasse auf Basis von Polyoxymethylen gegenüber den aus dem Stand der Technik bekannten POM-Formmassen,
insbesondere gegenüber den aus den EP-A-0 381 943 bekannten Massen, u. a. folgende Vorteile:

- Unkomplizierte Herstellung des Additives durch Substanzpolymerisation und anschließendem Vermahlen zu Pulver.
- Keine Verwendung von Lösungsmittel, wodurch die Trocknung des Additives entfällt. Restlösungsmittel können somit nicht im Polymer enthalten sein.
- Substanzcopolymerisate enthalten keine zur Emulsionspolymerisation notwendigen Hilfsstoffe, wie beispielsweise Emulgatoren, Schutzkolloide, oder sonstige Additive, die bei der Verwendung in Polyoxymethylen-Formmassen zu Verfärbungen bei üblichen Verarbeitungstemperaturen von größer 200°C führen.
- Hochgeregelte Copolymerisate neigen nicht zur Ausbildung von Schmutzpunkten (Stippenbildung), wie dies hochmolekulare Copolymerisate aufgrund von molekulargewichtsaufbauenden Vernetzungsreaktionen bei der Extrusion zeigen können.

Die Komponente (i)

Ein essentieller Bestandteil der erfindungsgemäßen Formmasse ist die Komponente (i). Hierbei handelt es sich um Polyoxymethylen-Homo- und/oder Copolymerisate, wobei im Rahmen der Erfindung hierunter sowohl ein Homopolymerisat allein, mehrere Homopolymerisate in Mischung miteinander, ein Copolymerisat allein, mehrere Copolymerisate in Mischung miteinander sowie Mischungen verstanden werden, die ein oder mehrere Homopolymerisate zusammen mit ein oder mehreren Copolymerisaten aufweisen.
Die den Hauptbestandteil (i) der erfindungsgemäßen Formmassen bildenden Polyoxymethylene können Homopolymere des Formaldehyds oder des Trioxans sein oder Copolymere des Trioxans. Sie können eine lineare Struktur aufweisen, aber auch verzweigt oder vernetzt sein. Sie können einzeln oder als Gemisch eingesetzt werden.
Unter Homopolymeren des Formaldehyds oder des Trioxans werden dabei solche Polymere verstanden, deren halbacetalische Hydroxylendgruppen chemisch, beispielsweise durch Veresterung oder Veretherung, gegen Abbau stabilisiert sind. Unter Copolymeren des Trioxans werden Copolymere aus Trioxan und mindestens einer mit Trioxan copolymerisierbaren Verbindung verstanden.
Die Homopolymerisate haben i. d. R. thermisch stabile Endgruppen wie Ester- oder Ethergruppen. Die Copolymerisate des Formaldehyds oder des Trioxans weisen vorteilhafterweise mehr als 50 %, insbesondere mehr als 75 %, Oxymethylengruppen auf. Besonders bewährt haben sich Copolymerisate, in welchen mindestens 0,1 Gew. -% Gruppen des Copolymeren enthalten sind, die mindestens zwei benachbarte Kohlenstoffatome in der Kette haben. Besondere technische Bedeutung haben Polyoxymethylene erlangt, die 1 bis 10 Gew.-% Comonomere enthalten.
Im Rahmen der Erfindung werden Polyoxymethylencopolymere als Komponente (i) bevorzugt, die neben den wiederkehrenden Einheiten $-CH_2O-$ noch bis zu 50, vorzugsweise 0,1 bis 20 und insbesondere 0,3 bis 10 mol-% an wiederkehrenden Einheiten

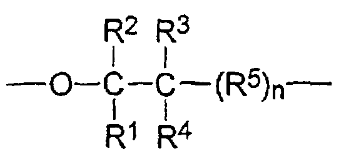

aufweisen, wobei $R^1$ bis $R^4$ unabhängig voneinander ein Wasserstoffatom, eine $C_1$- bis $C_4$-Alkylgruppe oder eine halogensubstituierte Alkylgruppe mit 1 bis 4 C-Atomen und $R^5$ eine $-CH_2-$, $-CH_2O-$, eine $C_1$- bis $C_4$-Alkyl- oder $C_1$- bis

$C_4$-haloalkylsubstituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel

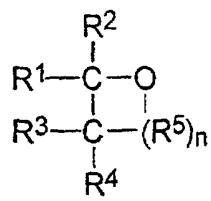

wobei $R^1$ bis $R^5$ und n die oben genannte Bedeutung haben.

Als Comonomere sind insbesondere Verbindungen der Formel

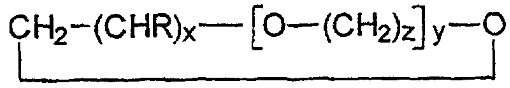 (I')

geeignet, in der R ein Wasserstoffatom, einen Alkylrest mit 1 bis 6, vorzugsweise 1, 2 oder 3 Kohlenstoffatomen, der mit 1, 2 oder 3 Halogenatomen, vorzugsweise Chloratomen, substituiert sein kann, einen Alkoxymethylrest mit 2 bis 6, vorzugsweise 2, 3 oder 4 Kohlenstoffatomen, einen Phenylrest oder einen Phenoxymethylrest bedeutet, x eine ganze Zahl von 1 bis 3, wobei y gleich Null ist, y eine ganze Zahl von 1 bis 3, wobei x gleich Null und z gleich 2 ist, und z eine ganze Zahl von 3 bis 6, vorzugsweise 3 oder 4, darstellt, wobei x gleich Null und y gleich 1 ist.

Als cyclische Ether eignen sich vor allem Epoxide, z. B. Ethylenoxid, Styroloxid, Propylenoxid oder Epichlorhydrin, sowie Glycidylether von ein- oder mehrwertigen Alkoholen oder Phenolen.

Als cyclische Acetale eignen sich vor allem cyclische Formale von aliphatischen oder cycloaliphatischen $\alpha,\omega$-Diolen mit 2 bis 8, vorzugsweise 2, 3 oder 4 Kohlenstoffatomen, deren Kohlenstoffkette in Abständen von 2 Kohlenstoffatomen durch ein Sauerstoffatom unterbrochen sein kann, z. B.:

Glykolformal (1,3-Dioxolan),
Propandiolformal (1,3-Dioxan)
Butandiolformal (1,3-Dioxepan) und
Diglykolformal (1,3,6-Trioxocan) sowie
4-Chlormethyl-1,3-dioxolan,
Hexandiolformal (1,3-Dioxonan) und
Butendiolformal (1,3-Dioxacyclohepten-5).

Als lineare Polyacetale eignen sich sowohl Homo- oder Copolymere der vorstehend definierten cyclischen Acetale als auch lineare Kondensate aus aliphatischen oder cycloaliphatischen $\alpha,\omega$-Diolen mit aliphatischen Aldehyden oder Thioaldehyden, vorzugsweise Formaldehyd. Insbesondere werden Homopolymere cyclischer Formale von aliphatischen $\alpha,\omega$-Diolen mit 2 bis 8, vorzugsweise 2, 3 oder 4 Kohlenstoffatomen verwendet, z. B. Poly-(1,3-dioxolan), Poly-(1,3-dioxan) und Poly-(1,3-dioxepan).

Die Werte für die Viskositätszahl der erfindungsgemäß eingesetzten Polyoxymethylene (gemessen an einer Lösung des Polymeren in Hexafluorisopropanol, das mit methanolischer Natronlauge auf pH 8 bis 9 eingestellt ist, bei 25 °C in einer Konzentration von 0,3 g/100 ml) sollen im allgemeinen mindestens 160 (ml/g) betragen. Die Kristallitschmelzpunkte der Polyoxymethylene liegen im Bereich von 140 bis 180 °C, vorzugsweise 150 bis 170 °C, ihre Dichten betragen 1,38 bis 1,45 g x $ml^{-1}$, vorzugsweise 1,40 bis 1,43 g x $ml^{-1}$ (gemessen nach DIN 53 479). In der Regel haben die verwendeten Polyoxymethylene ein zahlenmittleres Molekulargewicht $\overline{M_n}$ von 2 000 bis 200 000, vorzugsweise von 10 000 bis 100 000, und einen Volumen-Fließindex (melt volume rate, MVR) bei 190 °C und einer Auflagekraft von 2,16 kg nach DIN ISO 1133 von 0,5 bis 200 $cm^3$/10 min, vorzugsweise von 1 bis 70 $cm^3$/10 min.

Die erfindungsgemäß verwendeten, vorzugsweise binären oder ternären Trioxan-Copolymeren werden in bekannter Weise durch Polymerisieren der Monomeren in Gegenwart kationisch wirksamer Katalysatoren bei Temperaturen zwischen 0 und 150 °C, vorzugsweise zwischen 70 und 140 °C, hergestellt (vgl. z. B. DE-AS 14 20 283). Als Katalysatoren werden hierbei beispielsweise Lewissäuren, wie Bortrifluorid oder Antimonpentafluorid, und Komplexverbindungen von solchen Lewissäuren, vorzugsweise Etherate, z. B. Bortrifluoriddiethyletherat oder Bortrifluorid-di-tert.-butyletherat, verwendet. Ferner sind geeignet Protonensäuren, z. B. Perchlorsäure, sowie salzartige Verbindungen, z. B. Triphenylmethylhexafluorophosphat oder Triethyloxoniumtetrafluoroborat, Acetylperchlorat oder Ester der Perchlorsäure, z. B. Methoxymethylperchlorat oder tert.-Butylperchlorat. Zur Regelung des Molekulargewichts können alle Substanzen verwendet werden, von denen bekannt ist, daß sie bei der Polymerisation von Trioxan als Kettenüberträger wirken. Die Polymerisation kann in Masse, Suspension oder Lösung erfolgen. Zur Entfernung instabiler Anteile können die Copolymeren einem thermischen oder hydrolytischen kontrollierten, partiellen Abbau bis zu primären Alkoholendgruppen unterworfen werden (vgl. z. B. DE-AS 14 45 273 und 14 45 294).

Die erfindungsgemäß verwendeten Homopolymeren des Formaldehyds oder des Trioxans werden ebenfalls in bekannter Weise durch katalytisches Polymerisieren des Monomeren hergestellt (vgl. z. B. DE-AS 10 37 705 und 11 37 215).

Ganz besondere Bedeutung haben Polymerisate erlangt, welche aus Trioxan und 1 bis 10 Gew.-% Ethylenoxid, 1,3-Dioxolan oder Butandiolformal aufgebaut sind. Als zusätzliche Comonomere für Trioxan können bevorzugt noch Verbindungen mit mehreren polymerisierbaren Gruppen im Molekül, z. B. Alkylglycidylformale, Polyglykoldiglycidylether, Alkandioldiglycidylether, z. B. 1,4-Butandioldiglycidylether oder Bis-(alkantriol)-triformale verwendet werden. Geeignet sind aber auch, insbesondere für die Herstellung von Terpolymeren des Trioxans, Diformale, z. B. Diglycerindiformal.

Üblicherweise werden sie in einer Menge von 0,05 bis 5 Gew.-%, vorzugsweise 0,1 bis 2 Gew.-%, bezogen auf die Gesamtmonomermenge angewendet.

In der erfindungsgemäßen Formmasse ist die Komponente (i) in einer Menge von 40 bis 99,99, vorteilhafterweise 70 bis 99,99 und insbesondere 95 bis 99,9 Gew.-%, enthalten, bezogen auf das Gewicht der Komponenten (i), (ii) und (iii). Besonders vorteilhaft besteht die erfindungsgemäße Formmasse aus den Komponenten (i), (ii) und (iii).

Die Komponente (ii)

Ein weiterer essentieller Bestandteil der erfindungsgemäßen verstärkten oder unverstärkten Polyoxymethylen-Formmasse ist die Komponente (ii). Hierbei handelt es sich um einen Zusatzstoff, es können aber auch mehrere Zusatzstoffe gleichzeitig eingesetzt werden.

Je nach dem, wie das vorteilhafte Eigenschaftsprofil der erfindungsgemäßen Formmasse weiter variiert werden soll, werden ein oder mehrere Zusatzstoffe (ii) verwendet, wobei die Menge an (ii) bis zu 4/5 der Menge an (i) + (ii) betragen kann, vorzugsweise jedoch geringer als die Menge der Komponente (i) ist.

Die Zusatzstoffe (ii) können den unterschiedlichsten Verbindungsklassen entstammen und die unterschiedlichsten technischen Effekte bewirken. Als Zusatzstoffe (ii) kommen alle diejenigen Zusatzstoffe in Betracht, welche üblicherweise für die Verwendung in verstärkten oder unverstärkten Polyoxymethylen-Formmassen vorgesehen sind.

Beispiele geeigneter Zusatzstoffe (ii) sind Costabilisatoren, verstärkend wirkende Füllstoffe wie Glasfasern, Kohlefasern, Wollastonite sowie Kreide, Talkum, Ruß und Kaliumtitanate, Nukleierungsmittel, Antistatika, Licht- und Flammschutzmittel, Gleit- und Schmiermittel, Weichmacher, Antioxidantien, Pigmente, Farbstoffe, optische Aufheller, innere Trennmittel, Schlagzähmodifier wie Polyurethankautschuke oder Pfropfkautschuke auf der Basis von einpolymerisierten (Meth)Acrylsäureestern, einpolymerisiertem (Meth)Acrylnitril und/oder einpolymerisiertem Butadien sowie Polymere wie Polyalkylenterephthalate.

Besondere Bevorzugung unter den Zusatzstoffen (ii) genießen thermoplastische Polyurethane (TPU).

Geeignete TPU's können beispielsweise hergestellt werden durch Umsetzung von

a) organischen, vorzugsweise aromatischen Diisocyanaten,

b) Polyhydroxylverbindungen mit Molekulargewichten von 500 bis 8000 und

c) Kettenverlängerungsmitteln mit Molekulargewichten von 60 bis 400 in Gegenwart von ggf.

d) Katalysatoren,

e) Hilfsmitteln und/oder Zusatzstoffen.

Für die hierfür verwendbaren Ausgangsstoffe (a) bis (c), Katalysatoren (d), Hilfsmitteln und Zusatzstoffe (e) gilt folgendes:

a) Als organische Diisocyanate (a) kommen beispielsweise aliphatische, cycloaliphatische und vorzugsweise aromatische Diisocyanate in Betracht. Im einzelnen seien beispielhaft genannt: aliphatische Diisocyanate, wie Hexamethylen-diisocyanat, cycloaliphatische Diisocyanate, wie Isophoron-diisocyanat, 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und vorzugsweise aromatische Diisocyanate, wie 2,4-Toluylen-diisocyanat, Gemische aus 2,4- und 2,6-Toluylen-diisocyanat, 4,4'-, 2,4'- und 2,2'-Diphenylmethan-diisocyanat. Gemische aus 2,4'- und 4,4'-Diphenylmethan-diisocyanat, urethanmodifizierte flüssige 4,4'- und/oder 2, 4'-Diphenylmethan-diisocyanate, 4, 4'-Diisocyanatodiphenylethan-(1,2) und 1,5-Naphthylen-diisocyanat. Vorzugsweise verwendet werden Hexamethylendiisocyanat, Isophoron-diisocyanat, 1,5-Naphthylen-diisocyanat, Diphenylmethan-diisocyanat-Isomerengemische mit einem 4,4'-Diphenylmethan-diisocyanatgehalt von größer als 96 Gew.-% und insbesondere 4,4'-Diphenylmethandiisocyanat.

b) Als höhermolekulare Polyhydroxylverbindungen (b) mit Molekulargewichten von 500 bis 8000 eignen sich vorzugsweise Polyetherole und Polyesterole. In Betracht kommen jedoch auch hydroxylgruppenhaltige Polymere, beispielsweise Polyacetale, wie Polyoxymethylene und vor allem wasserunlösliche Formale, z. B. Polybutandiolformal und Polyhexandiolformal, und Polycarbonate, insbesondere solche aus Diphenylcarbonat und Hexandiol-1,6, hergestellt durch Umesterung, mit den obengenannten Molekulargewichten. Die Polyhydroxylverbindungen müssen zumindest überwiegend linear, d. h. im Sinne der Isocyanatreaktion difunktionell aufgebaut sein. Die genannten Polyhydroxylverbindungen können als Einzelkomponenten oder in Form von Mischungen zur Anwendung kommen.

Geeignete Polyetherole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z. B. genannt: Ethylenoxid, 1,2-Propylenoxid, 1,2- und 2,3-Butylenoxid. Vorzugsweise Anwendung finden Ethylenoxid und Mischungen aus Propylenoxid-1,2 und Ethylenoxid. Die Alkylenoxide können einzeln, alternierend nacheinander oder als Mischung verwendet werden. Als Startermolekül kommen beispielsweise in Betracht: Wasser, Aminoalkohole, wie N-Alkyl-diethanolamine, beispielsweise N-methyl-diethanolamin und Diole, wie Ethylenglykol, 1,3-Propylenglykol, Butandiol-1,4 und Hexandiol-1,6. Ggf. können auch Mischungen von Startermolekülen eingesetzt werden. Geeignete Polyetherole sind ferner die hydroxylgruppenhaltigen Polymerisationsprodukte des Tetrahydrofurans (Polyoxytetramethylen-glykole).

Vorzugsweise verwendet werden Polyetherole aus Propylenoxid-1,2 und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist; z. B. insbesondere Polyoxytetramethylen-glykole.

Solche Polyetherole können erhalten werden, indem man z. B. an das Startermolekül zunächst das Propylenoxid-1,2 und daran anschließend das Ethylenoxid polymerisiert oder zunächst das gesamte Propylenoxid-1,2 im Gemisch mit einem Teil des Ethylenoxids copolymerisiert und den Rest des Ethylenoxids anschließend anpolymerisiert oder schrittweise zunächst einen Teil des Ethylenoxids, dann das gesamte Propylenoxid-1,2 und dann den Rest des Ethylenoxids, an das Startermolekül anpolymerisiert.

Die im wesentlichen linearen Polyetherole besitzen Molekulargewichte von 500 bis 8000, vorzugsweise 600 bis 6000 und insbesondere 800 bis 3500. Sie können sowohl einzeln als auch in Form von Mischungen untereinander zu Anwendung kommen.

Geeignete Polyesterole können beispielsweise aus Dicarbonsäuren mit 2 bis 12 Kohlenstoffatomen, vorzugsweise 4 bis 8 Kohlenstoffatomen und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z. B. in Form einer Bernstein-, Glutar- und Adipinsäuremischung verwendet werden. Desgleichen sind Mischungen aus aromatischen und aliphatischen Dicarbonsäuren einsetzbar. Zur Herstellung der Polyesterole kann es ggf. vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder ggf. in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycapronsäure und vorzugsweise Polymerisationsprodukte von Lactonen, beispielsweise ggf. substituierten ω-Caprolactonen.

Als Polyesterole vorzugsweise verwendet werden Dialkylenglykol-polyadipate mit 2 bis 6 Kohlenstoffatomen im Alkylenrest, wie z. B. Ethandiol-polyadipate, 1,4-Butandiol-polyadipate, Ethandiol-butandiol-1,4-polyadipate, 1,6-Hexandiol-neopentylglykol-polyadipate, Polycaprolactone und insbesondere 1,6-Hexandiol-1,4-butandiol-polyadipate.

Die Polyesterole besitzen Molekulargewichte von 500 bis 6000, vorzugsweise von 800 bis 3500.

c) Als Kettenverlängerungsmittel (c) mit Molekulargewichten von 60 bis 400, vorzugsweise 60 bis 300, kommen vorzugsweise aliphatische Diole mit 2 bis 12 Kohlenstoffatomen, vorzugsweise 2, 4 oder 6 Kohlenstoffatomen, wie z. B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z. B. Terephthalsäure-bis-ethylenglykol oder -butandiol-1,4, Hydroxyalkylenether des Hydrochinons, wie z. B. 1,4-Di-(β-hydroxyethyl)-hydrochinon, (cyclo)aliphatische Diamine, wie z. B. 4,4'-Diamino-dicyclohexylmethan, 3,3'-Dimethyl-4,4'-diamino-dicyclohexylmethan, Isophoron-diamin, Ethylendiamin, 1,2- und 1,3-Propylen-diamin, N-Methylpropylen-diamin-1,3, N,N'-Dimethyl-ethylendiamin und aromatische Diamine, wie z. B. 2,4- und 2,6-Toluylendiamin, 3,5-Diethyl-2,4- und -2,6-toluylen-diamin und primäre ortho-di-, tri- und/oder tetraalkylsubstituierte 4,4'-Diamino-diphenylmethane.

Zur Einstellung von Härte und Schmelzpunkt der TPU können die Aufbaukomponenten (b) und (c) in relativ breiten molaren Verhältnissen variiert werden. Bewährt haben sich molare Verhältnisse von Polyhydroxylverbindungen (b) zu Kettenverlängerungsmitteln (c) von 1 : 1 bis 1 : 12, insbesondere von 1 : 1,8 bis 1 : 6,4, wobei die Härte und der Schmelzpunkt der TPU mit zunehmendem Gehalt an Diolen ansteigt.

Zur Herstellung der TPU werden die Aufbaukomponenten (a), (b) und (c) in Gegenwart von ggf. Katalysatoren (d), Hilfsmitteln und/oder Zusatzstoffen (e) in solchen Mengen zur Reaktion gebracht, daß das Äquivalenzverhältnis von NCO-Gruppen der Diisocyanate (a) zur Summe der Hydroxylgruppen oder Hydroxyl- und Aminogruppen der Komponenten (b) und (c) 1 : 0,85 bis 1,20, vorzugsweise 1 : 0,95 bis 1 : 1,05 und insbesondere 1 : 0,98 bis 1,02 beträgt.

d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z. B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z. B. Eisen-(III)-acetylacetonat, Zinnverbindungen, z. B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Teilen pro 100 Teile Polyhydroxylverbindung (b) eingesetzt.

Neben Katalysatoren können den Aufbaukomponenten (a) bis (c) auch Hilfsmittel und/oder Zusatzstoffe (e) einverleibt werden. Genannt seien beispielsweise Gleitmittel, Inhibitoren, Stabilisatoren gegen Hydrolyse, Licht, Hitze oder Verfärbung und Weichmacher.

Nähere Angaben über die obengenannten Hilfsmittel- und Zusatzstoffe sind der Fachliteratur, beispielsweise der Monographie von J. H. Saunders und K. C. Frisch "High Polymers", Band XVI, Polyurethane, Teil 1 und 2, Verlag Interscience Publishers 1962 bzw. 1964 oder der DE-OS 29 01 774 zu entnehmen.

Weiterhin bevorzugte Komponenten (ii) in der erfindungsgemäßen Formmasse sind zum Abfangen von Formaldehyd (Formaldehyd-Scavenger) geeignete Verbindungen, Weichmacher, Schmiermittel, Antioxidantien, Haftvermittler, Lichtstabilisatoren und Pigmente.

Gleit- und Schmiermittel können den unterschiedlichsten Substanzklassen angehören, wie z. B. Metallstearate, Wachse, Fettsäureamide (wie z. B. Bis-stearoylethylendiamid), Hydroxycarbonsäureamide, Fettsäuren, Fettsäureester, Paraffinwachse, Syntheseparaffine, niedermolekulare oder oligomere Polyolefinwachse (wie z. B. Polyethylen-Wachse), durch Pfropfung polar modifizierte Polyolefin-Wachse, Alkohole (wie z. B. Palmitylalkohol, Stearylalkohol, Talgfettalkohol), Ketone (wie z. B. Stearon), Silikone (wie z. B. Polydimethylsiloxan), Silikonöle, Polysiloxane, acrylmodifizierte Polysiloxane, Polytetrafluorethylen (PTFE), Polyalkylenglykole, spezielle Fettsäureester, wie sie in DE 4117655 beschrieben sind.

Besonders bevorzugt sind Ester von mehrwertigen Alkoholen (wie z. B. Ethylenglykol, Diethylenglykol, Butandiol, Glycerin, Diglycerin, Pentaerythrit, Sorbit) mit langkettigen Fettsäuren (z. B. Stearinsäure, Behensäure, Palmitinsäure, Caprinsäure, Laurinsäure, Linolsäure, Erucasäure). Die Hydroxylgruppen des Alkohols im Carbonsäureester können entweder vollständig verestert sein oder nur teilweise verestert sein. Besonders bevorzugt sind Glycerinester auf Basis gesättigter Fettsäuren, bei denen nicht alle Hydroxylgruppen verestert sind.

Weitere Angaben über die oben genannten Gleit- und Schmiermittel werden in Ullmanns Enzyklopädie der Technischen Chemie, Band 15, Verlag Chemie, 4. Auflage (1978) 268-270, Additives for Plastics Handbook, J. Murphy, Elsevier Advanced Technology (1996) 239-255 oder Polymere Werkstoffe, Band 2, H. Batzer, Thieme-Verlag (1984) 328-337 genannt.

Als Lichtstabilisatoren können im Prinzip alle dem Fachmann für diesen Zweck in Frage kommenden Substanzen dienen. Sie können einzeln oder als Gemisch eingesetzt werden. Als besonders vorteilhaft haben sich Lichtschutzmittel auf Basis von Benzotriazolderivaten (wie z. B. 2-(2'-Hydroxy-3',5'-di(1,1-Dimethylbenzyl)phenyl)-benzotriazol), Benzophenonderivaten, aromatischen Benzoatderivaten, Phenyltriazinen, Zimtsäureamiden (wie z. B. in WO 97/13749 beschrieben), oder sterisch gehinderten Aminverbindungen (HALS), beispielsweise Derivate des 2,2,6,6-Tetramethylpiperidins (wie z. B. einem Dimethylsuccinatpolymer mit 4-Hydroxy-2,2,6,6-Tetramethyl-1-piperidinethanol), erwiesen.

Nähere Angaben über geeignetet Lichtstabilisatoren finden sich in der Monographie von J. F. Rabek, Photostabilization of Polymers; Principles and Applications, Elsevier Applied Science, NY, 1990.

Auch als Zusatzstoffe verwendbare Polyamide sind an sich bekannt. Halbkristalline oder amorphe Harze, wie sie z. B. in der Encyclopedia of Polymer Science and Engineering, Vol. 11, S. 315 bis 489, John Wiley & Sons, Inc. 1988 beschrieben werden, können eingesetzt werden, wobei der Schmelzpunkt des Polyamids vorzugsweise unter 225 °C, vorzugsweise unter 215 °C liegt.

Beispiele hierfür sind Polyhexamethylenazelainsäureamid, Polyhexamethylensebacinsäureamid, Polyhexamethylendodekandisäureamid, Poly-11-aminoundekansäureamid und Bis-(p-aminocyclohexyl)-methandodekansäurediamid oder die durch Ringöffnung von Lactamen, z. B. oder Polylaurinlactam erhaltenen Produkte. Auch Polyamide auf der Basis von Terephthal- oder Isophthalsäure als Säurekomponente und/oder Trimethylhexamethylendiamin oder Bis- (p-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet.

Als besonders geeignete Polyamide seien Mischpolyamide auf der Grundlage von Caprolactam, Hexamethylendiamin, p,p'-Diamino-dicyclohexylmethan und Adipinsäure genannt. Ein Beispiel hierfür ist das unter der Bezeichnung Ultramid® 1 C von der BASF Aktiengesellschaft vertriebene Produkt.

Weitere geeignete Polyamide werden von der Firma Du Pont unter der Bezeichnung Elvamide® vertrieben.

Die Herstellung dieser Polyamide wird ebenfalls in der vorgenannten Schrift beschrieben. Das Verhältnis von endständigen Aminogruppen zu endständigen Säuregruppen kann durch Variation des Molverhältnisses der Ausgangsverbindungen gesteuert werden.

Der Anteil des Polyamids in der erfindungsgemäßen Formmasse beträgt vorzugsweise 0,005 bis 1,99 Gew.-%, insbesondere 0,01 bis 1,5 Gew.-%.

Durch die Mitverwendung eines Polykondensationsprodukts aus 2,2-Di-(4-hydroxyphenyl)propan (Bisphenol A) und Epichlorhydrin kann in manchen Fällen die Dispergierbarkeit der verwendeten Polyamide verbessert werden.

Derartige Kondensationsprodukte aus Epichlorhydrin und Bisphenol A sind kommerziell erhältlich. Verfahren zu deren Herstellung sind dem Fachmann ebenfalls bekannt. Handelsbezeichnungen der Polykondensate sind Phenoxy® (der Union Carbide Corporation) bzw. Epikote® (Firma Shell). Das Molekulargewicht der Polykondensate kann in weiten Grenzen variieren; prinzipiell sind die im Handel erhältlichen Typen sämtlich geeignet.

Als Zusatzstoffe können Polyoxymethylen-Formmassen auch geringe Mengen eines oder mehrerer Erdalkalisilikate und/oder Erdalkaliglycerophosphate enthalten. Als Erdalkalimetalle zur Bildung der Silikate und Glycerophosphate haben sich vorzugsweise Calcium und insbesondere Magnesium vorzüglich bewährt. Anwendung finden zweckmäßigerweise Calciumglycerophosphat und vorzugsweise Magnesiumglycerophosphat und/oder Calciumsilikat und vorzugsweise Magnesiumsilikat, wobei als Erdalkalisilikate, insbesondere solche bevorzugt sind, die durch die Formel

$$Me \cdot x\ SiO_2 \cdot n\ H_2O$$

beschrieben werden, in der bedeuten

- Me ein Erdalkalimetall, vorzugsweise Calcium oder insbesondere Magnesium,
- x eine Zahl von 1,4 bis 10, vorzugsweise 1,4 bis 6 und
- n eine Zahl gleich oder größer als 0, vorzugsweise 0 bis 8.

Die Zuschlagstoffe werden vorteilhafterweise in feingemahlener Form eingesetzt. Produkte mit einer durchschnittlichen Teilchengröße von kleiner als 100 µm, vorzugsweise von kleiner als 50 µm, sind besonders gut geeignet.

Als Zuschlagstoff können die erfindungsgemäßen Formmassen auch Mengen eines faser- oder teilchenförmigen Füllstoffs oder deren Mischungen enthalten.

Als verstärkend wirkende Füllstoffe seien beispielsweise Kaliumtitanat-Whisker, Kohlenstoff- und vorzugsweise Glasfasern genannt, wobei die Glasfasern z. B. in Form von Glasgeweben, -matten, -vliesen und/oder Glasseidenrovings oder geschnittener Glasseide aus alkaliarmem E-Glas mit einem Durchmesser von 5 bis 200 µm, vorzugsweise 8 bis 50 µm eingesetzt werden können, wobei die faserförmigen Füllstoffe nach ihrer Einarbeitung vorzugsweise eine mittlere Länge von 0,05 bis 1 mm, insbesondere 0,1 bis 0,5 mm aufweisen.

Andere geeignete zusätzliche Füllstoffe sind beispielsweise Wollastonit, Calciumcarbonat, Glaskugeln, Quarzmehl, Silicium- und Bornitrid oder Mischungen dieser Füllstoffe.

Bevorzugte Kombinationen von Füllstoffen sind: Wollastonit mit Glasfasern, wobei Mischungsverhältnisse von 5 : 1 bis 1 : 5 bevorzugt sind.

Auch Antioxidantien, die einzeln oder als Gemische eingesetzt werden können, können eingesetzt werden.

Als besonders wirksam erwiesen haben sich und daher vorzugsweise verwendet werden 2,2'-Methylen-bis-(4-methyl-6-tert.-butyl-phenyl), 1,6-Hexandiol-bis-[3,5-di-tert.-butyl-4-hydroxyphenyl)propionat (Irganox® 259), Pentaerythrityl-tetrakis-[3-(3,5-di-tert.-butyl-4-hydroxyphenyl)-propionat] (Irganox® 1010), Diethylenglykol-bis-[3-[3-(tert.-butyl)-4-hydroxy-5-methylphenyl]-propionat], oder Triethylenglykol-bis-[3-(3-(tert.-butyl)-4-hydroxy-5-methylphenyl]-propionat] (Irganox® 245) der Firma Ciba-Geigy, das besonders gut geeignet ist.

Diese Zusatzstoffe können in der erfindungsgemäßen Formmasse in den unterschiedlichsten Mengen vorhanden sein, wobei sich im Einzelfall die betreffende Menge des jeweils verwendeten Zusatzstoffs (ii) danach richtet, welchen speziellen nützlichen technischen Effekt man hiermit erzielen will. Zweckmäßigerweise werden die Zusatzstoffe (ii) in der erfindungsgemäßen Formmasse in den vom Stand der Technik her bekannten üblichen Mengen verwendet, wobei Mengen von 0,01 bis 40 Gew.-%, bezogen auf das Gewicht der Komponenten (i), (ii) und (iii), besonders vorteilhaft sind.

Die Komponente (iii)

Der für die Erfindung wesentliche Bestandteil der erfindungsgemäßen verstärkten oder unverstärkten Polyoxymethylen-Formmassen ist das als Additiv zur Verbesserung der Thermostabilität eingesetzte polymere Kunststoffmaterial (iii). Die Komponente (iii) ist daher eine essentielle Komponente.

Das polymere Kunststoffmaterial (iii) liegt in der erfindungsgemäßen Formmasse in einer Menge von 0,01 bis 2 Teilen bezogen auf die Summe von (i) + (ii) vor. Hierbei empfiehlt es sich im allgemeinen nicht, den Anteil des polymeren Materials (iii) in der erfindungsgemäßen Formmasse über 2 Teile, bezogen auf 100 Teile A + B, hinaus zu erhöhen, weil die Vorteile, die hierdurch noch erzielt werden können, den höheren Verbrauch an polymerem Material (iii) nicht mehr rechtfertigen. Außerdem kann es unter gewissen Umständen zu einer Entmischung des polymeren Materials (iii) und der erfindungsgemäßen Formmasse kommen. Dagegen soll die Menge des polymeren Materials (iii) in der erfindungsgemäßen Formmasse 0,01 Teile nicht unterschreiten, weil ansonsten die durch das polymere Material (iii) hervorgerufenen vorteilhaften technischen Effekte nicht immer den Ansprüchen der Praxis in vollem Umfang gerecht werden können. Demgemäß handelt es sich bei dem Bereich von 0,01 bis 2 Teilen um ein Optimum, innerhalb dessen der Anteil des polymeren Materials (iii) an der erfindungsgemäßen Formmasse variiert und den jeweils verwendeten sonstigen wesentlichen Bestandteilen der erfindungsgemäßen Formmasse angepaßt werden kann. Innerhalb dieses bevorzugten Bereiches ist ein engeres Fenster besonders zweckmäßig, so daß sich die erfindungsgemäße Formmasse in besonders bevorzugter Ausführungsform dadurch kennzeichnet, daß (iii) in einer Menge von 0,02 bis 1 Teil, bezogen auf die Summe (i) + (ii) gerechnet als 100 Teile, in der Formmasse enthalten ist. Innerhalb dieses besonders zweckmäßigen Bereiches, innerhalb dem die erfindungsgemäße Formmasse besonders vorteilhaft ist und sich hervorragend für die Herstellung von Formkörpern und Folien eignet, ist der Bereich von 0,05 bis 0,5 Teilen, wiederum bezogen auf die Summe (i) + (ii), die als 100 Teile gerechnet ist, hervorzuheben, weil aus einem solchen Anteil an polymerem Kunststoffmaterial (iii) ein exzellentes anwendungstechnisches Eigenschaftsprofil der betreffenden erfindungsgemäßen Formmasse resultiert. Dies bedeutet, daß die Menge an polymerem Kunststoffmaterial (iii) als Additiv zur Verbesserung der Thermostabilität von verstärkten oder unverstärkten Polyoxymethylen-Formmassen hinsichtlich des Materialaufwandes einerseits und des hiermit erzielten vorteilhaften technischen Effektes andererseits hervorragend ausgewogen und daher erfindungsgemäß ganz besonders bevorzugt ist.

Grundsätzlich kann die Polyoxymethylen-Formmasse gemäß der Erfindung die Bestandteile (i), (ii) und (iii) aufweisen, was dafür stehen soll, daß noch weitere nicht in der Beschreibung genannte Bestandteile in der Polyoxymethylen-Formmasse enthalten sein können. In besonders bevorzugter Ausführungsform jedoch besteht die Formmasse aus den drei genannten Komponenten (i), (ii) und (iii).

Wie bereits ausgeführt, ist (iii) ein Copolymerisat, welches durch Polymerisation in Substanz erhältlich ist: Hierunter wird ein Polymerisationsverfahren verstanden, bei dem Monomere ohne Lösungsmittel polymerisiert werden, so daß die Polymerisationsreaktion in Masse oder in Substanz vonstatten geht. Im Gegensatz dazu ist die Polymerisation in Emulsion (sogenannte Emulsionspolymerisation) und die Polymerisation in der Dispersion (sogenannte Suspensionspolymerisation) zu sehen, bei der das organische Monomere mit Schutzkolloiden und/oder Stabilisatoren in wäßriger Phase suspendiert wird und mehr oder weniger grobe Polymerisatteilchen gebildet werden. Eine besondere Form der Polymerisation in heterogener Phase ist die Perlpolymerisation, die im wesentlichen zur Suspensionspolymerisation zu rechnen ist.

Die Komponente A) des Substanzpolymerisats (iii)

Bei der Komponente A), welche zum Erhalt des Substanzcopolymerisats gemäß der Erfindung (Komponente

(iii)) eingesetzt werden kann, handelt es sich um ein oder mehrere (Meth)acrylate. Unter dem Begriff "(Meth) acrylate" werden grundsätzlich Ester der Acrylsäure als auch Ester der Methacrylsäure verstanden, welche über eine polymerisierbare vinylische Doppelbindung im Molekül verfügen.

Die Komponente A) kann aus einem oder mehreren Methacrylaten bestehen.
Diese können fakultativ ein oder mehrere Acrylate aufweisen.
Daher ist in einer besonderen Variante der Erfindung (iii) ein Copolymerisat, das durch Substanzpolymerisation einer Mischung erhältlich ist,
worin

A) aus

A1) 35 - 90 Teilen ein oder mehrerer Methacrylate der allgemeinen Formel I

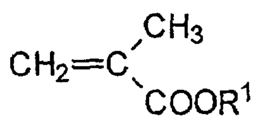 (I),

worin $R^1$ einen linearen oder verzweigten Alkylrest mit 1 bis 12 Kohlenstoffatomen bedeutet, und

A2) 0 - 25 Teilen ein oder mehrerer Acrylate der allgemeinen Formel II

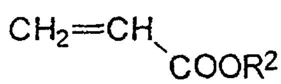 (II),

worin $R^2$ einen linearen oder verzweigten Alkylrest mit 1 bis 12 Kohlenstoffatomen bedeutet,

besteht,
wobei A1) und A2) zusammen 60-90 Teile ergeben und die Summe der Teile A1), A2) und B) 100 ergibt.

In einer bevorzugten erfindungsgemäßen Ausführungsform wird als Komponente A) lediglich eine Verbindung, vorzugsweise MMA, eingesetzt.

Obwohl die Vorteile der Erfindung bereits mit einem Copolymerisat erhalten werden können, welches durch Polymerisation in Substanz einer Mischung erhältlich ist, welche nur eine Komponente A) aufweist, werden im Rahmen der Erfindung auch dann besonders günstige Formmassen erhalten, wenn (iii) ein Copolymerisat ist, das durch Substanzpolymerisation einer Mischung erhältlich ist, worin

A) aus

A1) 34 - 89 Teilen ein oder mehrerer Methacrylate der allgemeinen Formel I

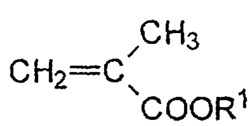 (I),

worin $R^1$ einen linearen oder verzweigten Alkylrest mit 1 bis 12 Kohlenstoffatomen bedeutet,
und

A2) 1 - 25 Teilen ein oder mehrerer Acrylate der allgemeinen Formel II

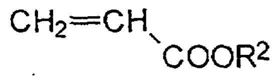 (II),

worin $R^2$ einen linearen oder verzweigten Alkylrest mit 1 bis 12 Kohlenstoffatomen bedeutet,

besteht,
wobei A1) und A2) zusammen 60 - 90 Teile ergeben und die Summe der Teile A1), A2) und B) 100 ergibt.

Unter den Verbindungen der Formel I sind insbesondere solche im Rahmen der Erfindung bevorzugt, in denen $R^1$ Methyl, Ethyl und/oder n-Propyl ist. Des weiteren besonders zweckmäßig sind Mischungen von Verbindungen, in denen in der allgemeinen Formel II $R^2$ n-Propyl, n-Butyl und/oder n-Pentyl bedeutet.

Durch die Verwendung einer Mischung aus A1) und A2) werden besonders günstige und an die jeweiligen Verhältnisse anpassbare Mischungen erhalten, da die Verbindungen der Formel II die Glastemperatur des Substanzpolymerisats erheblich senken können und so deren Verarbeitbarkeit erleichtern.

Die Komponente B) des Substanzpolymerisats (iii)

Die im Rahmen der Erfindung als Bestandteil B) einzusetzenden (Meth)acrylamide sind dem Fachmann allgemein geläufig. In bevorzugter Ausgestaltung der erfindungsgemäßen Formmasse wird als Komponente B) Acrylamid und/oder Methacrylamid eingesetzt. Die Menge an Komponente B) im Substanzpolymerisat (iii) liegt im Bereich von 10- 40 Teilen, wobei A1) (essentiell), A2) (optional) und B) (essentiell) zusammen 100 Teile ergeben sollen.

Wie bereits ausgeführt, besteht ein wesentlicher Unterschied der erfindungsgemäß einzusetzenden Copolymerisate (iii) zu den aus dem Stand der Technik bekannten polymeren Kunststoffmaterialien darin, daß die erfindungsgemäßen Copolymerisate durch Substanz- oder Massepolymerisation erhalten werden. Hierbei hat es sich als völlig unerwartet herausgestellt, daß, offensichtlich durch die Natur der Substanzpolymerisation bedingt, Copolymerisate mit niedrigerem Molekulargewicht, als sie beispielsweise in der Emulsions- oder Suspensionspolymerisation resultieren, diese in der Wirkung hinsichtlich der thermischen Stabilisierung von Polyoxymethylen-Formmassen deutlich übertreffen.

Die Komponente C) des Substanzpolymerisats (iii)

Ein weiterer für die Substanzpolymerisation zur Erzeugung der erfindungsgemäßen Copolymerisate (iii) essentieller Bestandteil C) sind > 0,2 bis 5 Teile Molekulargewichtsregler. Hierzu gehören dem Grunde nach alle dem Fachmann geläufigen Verbindungen, die zur Regelung des Molekulargewichts in Substanzpolymerisation einsetzbar sind. In einer nicht vollständigen Aufzählung gehören hierzu u. a. 4-Methyl-2,4-diphenylpent-1-en, 1,1'-(1,1-dimethyl-3-methylen-1,1-propendiyl)-bisbenzol, $\alpha$-Methylstyrol, bzw. aliphatische Mercaptoverbindungen, wie z. B. Ethylmercaptoacetat, 2-Ethylhexylmercaptoacetat, Methyl-3-mercaptopropionat, 2-Ethylhexylmercaptopropionat, Trimethylolpropantrimercaptoacetat, Glycoldimercaptoacetat, Pentaerythritol-tetrakis-mercaptoacetat, 1-Propanthiol, 2-Propanthiol, n-Dodecylmercaptan (1-Dodecanthiol), tert.-Dodecylmercaptan.

Von den vorgenannten Verbindungen ist n-Dodecylmercaptan besonders bevorzugt. Die Menge des Molekulargewichtsreglers wird dabei im Rahmen der Erfindung so eingestellt, daß Copolymerisate resultieren, die vorzugsweise niedrige Viskositätszahlen aufweisen. Aus diesem Zweck sind Mengen von 0,8 bis 2 Teilen besonders bevorzugt. Darüber hinaus stellt die Reglung der Substanzpolymerisate auch eine Möglichkeit zur Beeinflussung der Tg der Komponente (iii) dar. Neben der "weichen" Komponente A2) gelingt mit mehr Regler die Erniedrigung der Tg von (iii).

Die Komponente D) des Substanzpolymerisats (iii)

Eine weitere Komponente, die bis zu zwei Teilen in der Mischung vorhanden sein kann, welche zur Erzeugung der Substanzcopolymerisate der Erfindung (Komponente (iii)) eingesetzt wird, sind lipophile radikalische Polymerisationsinitiatoren. Obwohl die Polymerisationsreaktion grundsätzlich auf jede dem Fachmann geläufige Weise (beispielsweise durch Strahlung o. ä.) ausgelöst werden kann, ist eine Initiierung mit entsprechenden lipophilen Polymerisationsinitiatoren bevorzugt. Die radikalischen Polymerisationsinitiatoren sind insbesondere deswegen lipophil, damit sie sich in der Mischung der Substanzpolymerisation lösen. Zu einsetzbaren Verbindungen gehören neben den klassischen Azoinitiatoren, wie AIBN bzw. 1,1-Azobiscyclohexancarbonitril, u. a. aliphatische Peroxyverbindungen, wie z. B. tert.-Amylperoxyneodecanoat, tert.-Amylperoxypivalat, tert.-Butylperoxypivalat, tert.-Amylperoxy-2-ethylhexanoat, tert.-Butylperoxy-2-ethylhexanoat, tert.-Amylperoxy-3,5,5-trimethylhexanoat, Ethyl-3,3-di-(tert.-amylperoxy)-butyrat, tert.-Butylperbenzoat, tert.-Butylhydroperoxid, Decanoylperoxid, Laurylperoxid, Benzoylperoxid und beliebige Mischungen der genannten Verbindungen. Von den vorgenannten Verbindungen ist Laurylperoxid ganz besonders bevorzugt.

In äußerst zweckmäßiger Ausführungsform kennzeichnet sich die Formmasse der Erfindung dadurch, daß (iii) ein Copolymerisat ist, welches durch Substanzpolymerisation erhältlich ist von 35 bis 90 Teilen A1), 0 bis 25 Teilen A2), 10 bis 40 Teilen B), 0,2 bis 5 Teilen C) und 0,1 bis 2 Teilen D), wobei A1) + A2) + B) 100 Teile (wt/wt) ergeben müssen. Zweckmäßig sind besonders Copolymerisate aus 50 bis 80 Teilen A1), 0 bis 20 Teilen A2), 20 bis 40 Teilen B), 0,2 bis 5 Teilen C) und 0,1 bis 2 Teilen D), wobei A1) + A2) + B) 100 Teile (wt/wt) ergeben müssen

Schließlich ist es in noch einer weiteren Ausführungsform bevorzugt, wenn als A1) Methylmethacrylat, als A2) n-Butylacrylat, als B) Methacrylamid, als C) n-Dodecylmercaptan und als D) Laurylperoxid verwendet wird.

Wie bereits ausgeführt, wird auf dem Wege der Substanzpolymerisation ein von der Emulsionspolymerisation oder Suspensionspolymerisation vergleichbarer Monomermischungen deutlich unterschiedliches Polymeres (Copolymerisat) erhalten. Da die in der Substanzpolymerisation erhältlichen Produkte häufig schlecht oder überhaupt nicht in herkömmlichen Lösungsmitteln löslich sind, werden sie bevorzugt vor ihrem Einsatz in Polyoxymethylen zu einem feinen Pulver gemahlen. Dieses feine Pulver wird auf übliche Weise in das Formmassen-Material eingearbeitet.

Weiterhin bevorzugt weisen die gemäß der Erfindung in Polyoxymethylen-Formmassen einzusetzenden Copolymerisate (iii) eine Tg von ≤ 145 °C, vorzugsweise ≤ 140 °C auf.

Methodisch weist die Herstellung der erfindungsgemäßen Formmasse keine größeren Besonderheiten auf. Vielmehr wird sie nach der üblichen und bekannten Methode der Herstellung von Formmassen erhalten. Hierzu können die Komponenten (i), (ii) und (iii) der erfindungsgemäßen Formmasse einzeln oder in Form von einer oder von mehreren vorgefertigten Mischungen einer geeigneten Mischvorrichtung zugeführt und dort bei Temperaturen von 0 bis 260 °C gemischt werden. Hierbei ist es vorteilhaft, die Komponenten (1), (ii) und (iii) der erfindungsgemäßen Formmasse bei Temperaturen von 0 bis 150 °C, vorzugsweise von 0 bis 50 °C, intensiv zu vermischen, die hierbei resultierende vorgefertigte Mischung in einen Extruder, vorzugsweise einen Mehrfach-Wellenextruder, welcher ggf. mit einer Entgasungsvorrichtung ausgestattet ist, einzubringen und bei Temperaturen von 150 bis 260 °C, vorzugsweise 200 bis 250 °C aufzuschmelzen, die resultierende Schmelze zu entgasen und zu extrudieren und hiernach aus dem betreffenden Extruder auszutragen. Die in dieser Weise erhaltene erfindungsgemäße Formmasse kann nach dem Abkühlen granuliert werden. Die resultierenden Granulate können zwischengelagert oder direkt zur Herstellung von Folien oder Formkörpern verwendet werden, wobei für die Herstellung der Folien und Formkörper aus der erfindungsgemäßen Formmasse die üblichen und bekannten Methoden des Blasformens und des Spritzgießens in Betracht kommen.

Gegenstand der Erfindung ist mithin auch ein Verfahren zur Herstellung eines Formkörpers oder einer Folie aus einer Formmasse durch

(1) Aufschmelzen und Vermischen der Bestandteile der Formmasse auf einem Extruder bei 150 bis 260 °C und

(2) formgebende Verarbeitung der hierdurch resultierenden Formmasse zu dem betreffenden Formkörper oder der betreffenden Folie,

wobei verstärkte oder unverstärkte Polyoxymethylen-Formmassen mit den hierin weiter oben angegebenen Kennzeichen eingesetzt werden.

Die erfindungsgemäße Formmasse weist im Vergleich zu bekannten Formmassen neben guten mechanischen Eigenschaften eine deutliche Verbesserung der Temperaturbeständigkeit und eine geringere Verfärbungstendenz sowie einen verringerten Restformaldehydgehalt auf. Die erfindungsgemäße Formmasse eignet sich daher hervorragend für die Herstellung von Folien und Formkörpern. Die Formkörper finden mit Vorteil Verwendung in der Fahrzeug-, Elektrogeräte- und Elektronikindustrie.

Gegenstand der Erfindung ist des weiteren die Verwendung von Copolymerisaten, erhältlich durch Substanzpolymerisation einer Mischung von

A) 60 - 90 Teilen ein oder mehrerer (Meth)acrylate,

B) 10 - 40 Teilen ein oder mehrerer (Meth)acrylamide,

C) bezogen auf 100 Teile A) + B)
> 0,2 - 5 Teilen Molekulargewichtsregler
und

D) bezogen auf 100 Teile A) + B) bis zu 2 Teilen lipophile radikalische Polymerisationsinitiatoren,

wobei sich alle Mengen auf Gewichtsteile (wt/wt) beziehen und A) und B) so gewählt werden, daß sie zusammen 100 Teile ergeben,
zur thermischen Stabilisierung von Formmassen, welche Polyoxymethylen-Homo- und/oder Copolymerisate enthalten.

Zur Erfindung gehören auch Formkörper und Halbzeuge aus den hierin beschriebenen Formmassen oder aufweisend diese Formmassen sowie Folien aus oder aufweisend erfindungsgemäße Formmassen. Halbzeuge sind dabei thermoplastische weiterverarbeitbare Formkörper, wie Tafeln, Rohre, Profile usw., die nicht notwendig im Spritzguß hergestellt sein müssen, aber können.

In besonders vorteilhafter Abwandlung der erfindungsgemäßen Verwendung werden Copolymerisate in einer Menge von 0,1 bis 2 Teilen bezogen auf 100 Teile Formmasse eingesetzt, wobei die 100 Teile ohne die zur thermischen Stabilisierung dienenden Copolymerisate gerechnet sind.

Die nachfolgenden Beispiele dienen zur Verdeutlichung des Gegenstandes der Erfindung.

1. Zunächst wird die allgemeine Durchführung einer Substanzpolymerisation zur Herstellung von erfindungsgemäß verwendbaren Copolymeren beschrieben. "Copolymere" umfaßt dabei sowie für die gesamte Beschreibung ein Polymer, welches wenigstens 2 voneinander verschiedene Monomere aufweist. Insbesondere also auch Terpolymere usw. Die zur Herstellung der erfindungsgemäßen Beispiele erforderlichen Angaben über Rezeptur, Verfahrensparameter und Spezifikationen sind den Tabellen im Anschluß zu entnehmen.

1.1 Apparaturen

a) Becherglas mit Magnetrührer (Laboransätze) bzw. beheizbarer Metallkessel mit Rührer (Technikums-, Betriebsansätze) zum Ansetzen des Monomergemisches.

b) Form bestehend aus 2 Glasplatten* zwischen die zur Abdichtung ein Kunststoffkeder eingelegt wird. Der Abstand der Glasplatten und damit die Dicke der herzustellenden Polymerplatte wird über den Keder-Durchmesser gesteuert. Der Keder umfasst drei Seiten der Form; die vierte Seite bleibt offen oder wird nach der Befüllung mit Keder verschlossen. Um eine Haftung des Polymeren am Glas bzw. am Keder zu vermeiden werden die Glasplatten mit einer Trennfolie (z.B. ® Hostaphan RV 36/Fa. Putz) belegt. Die Form wird an drei Seiten durch spezielle Klammern fixiert.
* Spezifikation der Glasplatten: ® SECURIT-Glas (Fa. Glaskontor, Gebr. Wolff + Co., Kinzigheimer Weg 100, Hanau)

c) Elektrisch oder mit Dampf beheizte Wasserbäder geeigneter Größe mit Temperaturregelung. Die Wasserbäder sind mit Rührer zur Umwälzung der Bad-Flüssigkeit, sowie (bei größeren Bädern) mit Tischtennisbällen zur Minimierung des Flüssigkeits- und Wärmeverlustes ausgestattet.

d) Temperaturschreiber mit Meßfühler

e) Umluft-Trockenschrank

f) Retsch-Schlagwerksmühle oder Alpine-Hammermühle (je nach zu mahlender Polymermenge)

1.2 Ansatz

Die Gesamtfüllmenge ergibt sich aus der Plattengröße und der Kederstärke. Dabei wird die Form nur zu 4/5 gefüllt, um ein Überlaufen der Monomeren infolge der Wärmeausdehnung beim Aufheizen der gefüllten Form im Wasserbad zu verhindern.

Art und Konzentration der Einsatzstoffe sind der jeweiligen Rezeptur zu entnehmen.

Das Reaktionsgemisch setzt sich zusammen aus:

Monomeren, Reglern, Initiatoren;

1.3 Durchführung

Die Durchführung der Substanzpolymerisation gliedert sich in die 6 allgemeinen Schritte A bis F, deren Abarbeitung in Abhängigkeit von den Vorgaben in der jeweiligen Rezeptur variieren kann.

Schritt A:

Aufheizen des Wasserbades auf die vorgegebene Polymerisationstemperatur.

Schritt B:

Laboransätze: In einem Becherglas werden Monomere und Regler eingewogen und soweit erwärmt bis die Lösung homogen ist. Zur warmen Lösung wird der Initiator zugesetzt. Sobald dieser gelöst ist wird die Mischung in die vorbereitete, im Trockenschrank auf ca. 75 °C vorgewärmte Glasform gefüllt.

Technikums-, Betriebsansätze: Monomere und Regler werden in den Metallkessel chargiert und mittels Heißwasserkreislauf soweit erwärmt, bis die Lösung homogen ist. Nun wird der Initiator zugesetzt und sobald dieser gelöst ist, die Mischung in die vorbereitete, im Trockenschrank auf ca. 75 °C vorgewärmte Glasform gefüllt.

Schritt C:

Die befüllte Form wird senkrecht in das auf die vorgegebene Reaktionstemperatur erhitzte Wasserbad gestellt. Die Temperaturen des Wasserbades und gegebenenfalls des Reaktionsgemisches in der Form werden mittels Meßfühler ermittelt und auf dem Temperaturschreiber erfaßt.

Schritt D:

Nach Beendigung der Polymerisation wird die Form aus dem Wasserbad entnommen und zur Nachpolymerisation in einen auf 120°C vorgeheizten Umluft-Trockenschrank gestellt.

Schritt E:

Nach beendeter Nachpolymerisation läßt man die Form auf Raumtemperatur abkühlen, entfernt die Klammern und Glasplatten und zieht vorsichtig die Trennfolie rückstandsfrei ab.

Schritt F:

Zerkleinerung der Platten in einer geeigneten Mühle (Retsch-Mühle oder Alpine-Hammermühle).

1.4 Analytik

Von allen Polymeren wird die Glasübergangstemperatur mittels Differenzieller Scanning Kalorimetrie (DSC) bestimmt.

Wesentliche Daten und Ergebnisse für Copolymerisate (iii) sind in Tabelle 1 angegeben.

Tabelle 1

Die stoffliche Zusammensetzung der erfindungsgemäß verwendeten Thermostabilisatoren (iii)

| Nr. | **Zusammensetzung der Mischung zum Erhalt von (iii) in Gew.-Teilen** | | | | | Tg °C |
|---|---|---|---|---|---|---|
| | **Komponente (A1)** | **Komponente (B)** | **Komponente (A2)** | **Komponente (C)** | **Komponente (D)** | |
| 1 | 80 MMA | 20 MAA | 0 n-BA | 2,0 n-DDM | 0,2 LPO | 123,0 |
| 2 | 75 MMA | 20 MAA | 5 n-BA | 2,0 n-DDM | 0,2 LPO | 125,5 |
| 4 | 80 MMA | 20 MAA | 0 n-BA | 2,0 n-DDM | 0,4 TBPB | 132,7 |
| 5 | 80 MMA | 20 MAA | 0 n-BA | 2,0 n-DDM | 0,4/0,05 TBPB / LPO | 133,9 |
| 6 | 80 MMA | 20 MAA | 0 n-BA | 2,0 n-DDM | 0,4/0,1 TBPB / LPO | 134,1 |
| 7 | 80 MMA | 20 MAA | 0 n-BA | 1,8 n-DDM | 0,2 LPO | 130,9 |
| 8 | 80 MMA | 20 MAA | 0 n-BA | 1,6 n-DDM | 0,2 LPO | 133,9 |

Tabelle 1 fortgesetzt

| Nr. | Zusammensetzung der Mischung zum Erhalt von (iii) in Gew.-Teilen | | | | | Tg °C |
|---|---|---|---|---|---|---|
| | **Komponente (A1)** | **Komponente (B)** | **Komponente (A2)** | **Komponente (C)** | **Komponente (D)** | |
| 15 | 80 MMA | 20 MAA | 0 n-BA | 2,5 n-DDM | 0,4 LPO | 128,0 |
| 16 | 75 MMA | 20 MAA | 5 n-BA | 1,6 n-DDM | 0,2 LPO | 130,0 |
| 19 | 70 MMA | 25 MAA | 5 n-BA | 2,0 n-DDM | 0,2 LPO | 130,5 |
| 20 | 65 MMA | 25 MAA | 10 n-BA | 2,0 n-DDM | 0,2 LPO | 127,5 |
| 21 | 65 MMA | 20 MAA | 15 n-BA | 2,0 n-DDM | 0,2 LPO | 114,5 |
| 22 | 55 MMA | 25 MAA | 20 n-BA | 2,0 n-DDM | 0,2 LPO | 114,0 |
| 23 | 50 MMA | 30 MAA | 20 n-BA | 2,0 n-DDM | 0,2 LPO | 112,5 |
| 25 | 50 MMA | 30 MAA | 20 n-BA | 2,0 n-DDM | 0,8 TAPEH | 116,6 |

Tabelle 1 fortgesetzt

| Nr. | Zusammensetzung der Mischung zum Erhalt von (iii) in Gew.-Teilen | | | | | Tg °C |
|---|---|---|---|---|---|---|
| | Komponente (A1) | Komponente (B) | Komponente (A2) | Komponente (C) | Komponente (D) | |
| 26 | 50 MMA | 30 MAA | 20 n-BA | 2,0 n-DDM | 0,4 TBPB | 134,5 |
| 27 | 50 MMA | 30 MAA | 20 n-BA | 2,0 n-DDM | 0,8 TBPB | 135,5 |
| 28 | 50 MMA | 30 MAA | 20 n-BA | 2,0 n-DDM | 1,6 TBPB | 131,6 |
| 29 | 50 MMA | 30 MAA | 20 n-BA | 2,0 n-DDM | 0,4 ACHCN | 129,9 |
| 30 | 50 MMA | 30 MAA | 20 n-BA | 2,0 n-DDM | 0,8 ACHCN | 129,1 |
| 31 | 50 MMA | 30 MAA | 20 n-BA | 2,0 n-DDM | 1,6 ACHCN | 123,8 |
| 32 | 50 MMA | 30 MAA | 20 n-BA | 2,0 n-DDM | 0,4 TBHP | 128,3 |
| 33 | 50 MMA | 30 MAA | 20 n-BA | 2,0 n-DDM | 0,8 TBHP | 126,8 |
| 34 | 50 MMA | 30 MAA | 20 n-BA | 2,0 n-DDM | 1,6 TBHP | 127,7 |
| 35 | 45 MMA | 35 MAA | 20 n-BA | 2,0 n-DDM | 0,2 LPO | 119,0 |
| 36 | 80 MMA | 20 MAA | 0 n-BA | 2,0 n-DDM | 0,2 LPO | 127,4 |
| 37 | 80 MMA | 20 MAA | 0 n-BA | 2,5 n-DDM | 0,4 LPO | 128,0 |
| 38 | 80 MMA | 20 MAA | 0 n-BA | 3,0 n-DDM | 0,4 LPO | 127,0 |

Tabelle 1 fortgesetzt

| Nr. | Zusammensetzung der Mischung zum Erhalt von (iii) in Gew.-Teilen | | | | | Tg °C |
|---|---|---|---|---|---|---|
| | Komponente (A1) | Komponente (B) | Komponente (A2) | Komponente (C) | Komponente (D) | |
| 39 | 80 MMA | 20 MAA | 0 n-BA | 3,5 n-DDM | 0,4 LPO | 121,5 |
| 40 | 80 MMA | 20 MAA | 0 n-BA | 4,0 n-DDM | 0,4 LPO | 113,0 |
| 41 | 80 MMA | 20 MAA | 0 n-BA | 4,5 n-DDM | 0,8 LPO | 110,0 |
| 42 | 80 MMA | 20 MAA | 0 n-BA | 5,0 n-DDM | 0,8 LPO | 107,0 |
| 43 | 80 MMA | 20 MAA | 0 n-BA | 5,5 n-DDM | 0,8 LPO | 107,5 |
| 44 | 80 MMA | 20 MAA | 0 n-BA | 6,0 n-DDM | 0,8 LPO | 103,0 |
| 45 | 80 MMA | 20 MAA | 0 n-BA | 6,0 n-DDM | 1,5 LPO | 102,0 |
| 46 | 80 MMA | 20 MAA | 0 n-BA | 6,0 n-DDM | 2 LPO | 100,5 |
| 47 | 75 MMA | 20 MAA | 5 PEGMMA | 2,0 n-DDM | 0,2 LPO | 116 |
| 48 | 70 MMA | 20 MAA | 10 PEGMMA | 2,0 n-DDM | 0,2 LPO | 108 |
| 49 | 80 MA | 20 MAA | - | 2,0 n-DDM | 0,2 LPO | 31,5 |
| 50 | 70 MA | 30 MAA | - | 2,0 n-DDM | 0,2 LPO | 33,5 |
| 51 | 80 MMA | 20 AA | - | 2,0 n-DDM | 0,2 LPO | 111,0 |

Tabelle 1 fortgesetzt

| Nr. | Zusammensetzung der Mischung zum Erhalt von (iii) in Gew.-Teilen | | | | | Tg °C |
|---|---|---|---|---|---|---|
| | Komponente (A1) | Komponente (B) | Komponente (A2) | Komponente (C) | Komponente (D) | |
| 52 | 75 MMA | 20 AA | 5 n-BA | 2,0 n-DDM | 0,2 LPO | 106,0 |
| 53 | 50 MMA | 30 AA | 20 n-BA | 2,0 n-DDM | 0,2 LPO | 93,5 |
| 54 | 80 MMA | 20 EA | - | 2,0 n-DDM | 0,2 LPO | 17,5 |
| 55 | 40 MMA | 20 MAA | 40 HEMA | 2,0 n-DDM | 0,2 LPO | 111,0 |
| 56 | 40 MMA | 20 MAA | 40 HPMA | 2,0 n-DDM | 0,2 LPO | 101,0 |

Erläuterungen:

MMA = Methylmethacrylat
MAA = Methacrylamid
n-BA = n-Butylacrylat
n-DDM = n-Dodecylmercaptan
LPO = Laurylperoxid
PEGMMA = Poly(ethylenglykol)-methylethermethacrylat
MA = Methylacrylat
AA = Acrylamid

TBPB = tert.-Butylperbenzoat
TAPEH = tert.-Amylperoxy-2-ethylhexanoat
ACHCN = 1,1-Azobiscyclohexancarbonitril
TBHP = tert.-Butylhydroperoxid
EA = Ethylacrylat
HEMA = Hydroxyethylmethacrylat
HPMA = Hydroxypropylmethacrylat

2. Zum Vergleich werden nicht erfindungsgemäße Emulsions- und Suspensionspolymerisate hergestellt.

2.1 Die Herstellung des nicht erfindungsgemäß zu verwendenden Copolymerisats gemäß EP-A-0 381 943 Beispiel 1 der Zusammensetzung 75 Gew.-% Methylmethacrylat, 5 Gew.-% n-Butylacrylat und 20 Gew.-% Methacrylamid erfolgte nach der im folgenden beschriebenen Emulsionspolymerisationsmethode.

2.1.1 Herstellvorschrift (Emulsionspolymerisat)

In einem Reaktor wurden 556 ml Wasser, 1,5 g Kaliumstearat und 0,3 g Natriumhydrogencarbonat vorgelegt und auf 75 °C erhitzt. Zu der erhitzten Vorlage wurden unter Rühren im Verlauf von 2 Stunden gleichzeitig

(a) eine Lösung von 0,45 g Kaliumperoxodisulfat in 28,0 ml Wasser (Zulauf 1) und

(b) 112,5 g Methylmethacrylat und 7,5 g n-Butylacrylat (Zulauf 2) hinzugegeben.

Zwanzig Minuten nach Beendigung des Zulaufs 2 wurden im Verlauf zweier Stunden

(c) 30,0 g Methacrylamid in 69,3 ml Wasser (Zulauf 3) zum Reaktionsgemisch hinzugegeben.

Die nach einer Nachreaktionszeit von 2 Stunden resultierende Emulsion eines Feststoffgehalts von 18,6 Gew.-% wurde direkt für die Herstellung der nichterfindungsgemäßen Formmasse verwendet.

Ein Teil des in der Suspension enthaltenen Copolymerisats wurde isoliert, getrocknet und analysiert. Die mit Hilfe der chemischen Elementanalyse ermittelten Werte stimmten mit den theoretisch berechneten Werten sehr gut überein. Die Glastemperatur Tg des Copolymerisats wurde mit der Hilfe der Differentialthermoanalyse (DSC) zu 145 °C bestimmt. Das erhaltene Polymerisat wird als Polymeres Material (iii) in den Vergleichsbeispielen V2a bis V2e eingesetzt.

2.1.2 Emulsionspolymerisat (gereinigt)

Das unter 2.1.1 erhaltene Copolymerisat wurde filtriert, mit Wasser gewaschen, getrocknet und als Pulver für die Herstellung von nicht erfindungsgemäßen Formmassen in den Vergleichsbeispielen V3a bis V3d verwendet.

2.2 Die Herstellung des nicht erfindungsgemäß zu verwendenden Copolymerisats gemäß EP-A-0 381 943 Beispiel 2 der Zusammensetzung 75 Gew.-% Methylmethacrylat, 5 Gew.-% n-Butylacrylat und 20 Gew.-% Methacrylamid erfolgte nach der im folgenden beschriebenen Suspensions-Perl-Polymerisationsmethode.

2.2.1 Herstellvorschrift (Suspensions-Perl-Polymerisat)

Es wurde im wesentlichen wie in 2.1.1 verfahren, nur daß die Mengen der Monomeren und des Polymerisationsinitiators, des Kaliumstearates und des Natriumhydrogencarbonates erhöht wurden, so daß ein Reaktionsansatz mit einem Feststoffgehalt von 36 Gew.-% resultierte. Das hierbei erhaltene Copolymerisat wurde vom Wasser getrennt, gewaschen, getrocknet, gemahlen und als Pulver für die Herstellung der nicht erfindungsgemäßen Formmassen aus den Vergleichsbeispielen V4a bis V4e verwendet.

2.3 Für das Vergleichsbeispiel V1 wurde als Komponente (iii) Ultramid® 1C von BASF eingesetzt. Es handelt sich hierbei um Mischpolyamide auf der Grundlage von Caprolactam, Hexamethylendiamin, p,p'-Diaminodicyclohexylmethan und Adipinsäure.

3. Herstellung und Eigenschaften erfindungsgemäßer (Beispiele B1 bis B56) und nicht erfindungsgemäßer (Vergleichsversuche V1 bis V6) Formmassen:

3.1 Allgemeine Versuchsvorschrift:

Bei den Beispielen B1 bis B56 und den Vergleichsversuchen V1 bis V6 wurde jeweils ein thermisch nicht abgebautes Polyoxymethylen-Copolymerisat (MVR = 1,8 bis 4,0 $cm^3$/10 Minuten; ermittelt nach DIN ISO 1133 bei 190 °C und einer Auflagekraft von 2,16 Kg), welches aus einer Mischung aus 97,3 Gew.-% Trioxan und 2,7 Gew.-% Butandiolformal hergestellt worden war und welches noch ungefähr 5 Gew.-% nicht umgesetztes Trioxan und ungefähr 3 Gew.-% thermisch instabiles Formaldehydaddukt enthielt, mit unterschiedlichen Mengen an Zusatzstoffen (B) und Additiven (C) zur thermischen Stabilisierung in einem Trockenmischer bei einer Temperatur von 23 °C gemischt. Die resultierenden vorgefertigten Mischungen wurden bei einer Temperatur von 23 °C in einen Doppelschneckenextruder mit Entgasungsvorrichtung (Typ ZSK 28 der Firma Werner und

Pfleiderer, Stuttgart) eingebracht, bei 180 bis 230 °C homogenisiert und entgast, wonach das homogenisierte Gemisch durch eine Düse als Strang ausgepreßt und granuliert wurde.
3.2 Zur Prüfung der Thermostabilität und Verfärbungsneigung wurden bestimmt:

GV($N_2$): Der Gewichtsverlust in Gew.-% einer Probe aus 1,2 g Granulat bei zwei- und/oder sechszehnstündigem Erhitzen auf 222°C unter Stickstoff;

GV(Luft): Gewichtsverlust in Gew.-% einer Probe aus 1,2 g Granulat bei zwei- und/oder sechsstündigem Erhitzen auf 222°C unter Luft;

MVR: (melt volume rate) ermittelt nach ISO 1133 bei 190°C und einer Auflagekraft von 2,16 kg;

CieLab-Werte: Farbmetrische Bestimmung der Farbabstände L*, a* und b* (CieLab-Farbkordinaten) des Granulates nach der Extrusion zum Zeitpunkt 2 Stunden nach Lagerung in einem Umlufttrockenschrank bei 140°C gemäß DIN 6174 (ASTM E 1347).

Die Tabelle 2 gibt einen Überblick über die hergestellten nicht erfindungsgemäßen und erfindungsgemäßen Formmassen. Die Ergebnisse der vorstehend genannten Tests werden in der Tabelle 3 zusammengefaßt.

Tabelle 2

Die stoffliche Zusammensetzung der nicht erfindungsgemäßen (Vergleichsbeispiele V1 bis V6) und der erfindungsgemäßen (Beispiel B1 bis B56) Formmassen

| Bsp. Nr. | Komponente (i) | Zusammensetzung in Gew.-% der Komponente (ii) | | | Polymeres Material (iii) |
|---|---|---|---|---|---|
| | | (ii) | (ii) | (ii) | |
| V1 | Ultraform® H20-00 von Ultraform GmbH | Irganox® 245 FF von Ciba Geigy | Melamin-Formaldehyd-Kondensat gemäß DE-PS-25 40 207 | Magnesiumsilikat Ambosol® von Hoechst AG | Ultramid® 1C von BASF AG |
| V1a | (99,40) | (0,35) | (0,2) | (0,05) | (0,02) |
| V2 | Ultraform® H20-00 von Ultraform GmbH | Irganox® 245 FF von Ciba Geigy | Melamin-Formaldehyd-Kondensat gemäß DE-PS-25 40 207 | | Emulsions-polymerisat gemäß 2.1.1 |
| V2a | (99,45) | (0,35) | (0,2) | | (0,28) |
| V2b | (99,45) | (0,35) | (0,2) | | (0,54) |
| V2c | (99,45) | (0,35) | (0,2) | | (1,08) |
| V2d | (99,45) | (0,35) | (0,2) | | (1,64) |
| V2e | (99,45) | (0,35) | (0,2) | | (2,72) |

Tabelle 2 fortgesetzt

| Bsp. Nr. | Komponente (i) | Zusammensetzung in Gew.-% der Komponente (ii) | | Polymeres Material (iii) |
|---|---|---|---|---|
| | | (ii) | (ii) | |
| V3 | Ultraform® H20-00 von Ultraform GmbH | Irganox® 245 FF von Ciba Geigy | Melamin-Formaldehyd-Kondensat gemäß DE-PS-25 40 207 | aufgereinigtes Emulsionspolymerisat gemäß 2.1.2 |
| V3a | (99,45) | (0,35) | (0,2) | (0,05) |
| V3b | (99,45) | (0,35) | (0,2) | (0,10) |
| V3c | (99,45) | (0,35) | (0,2) | (0,20) |
| V3d | (99,45) | (0,35) | (0,2) | (0,30) |
| V4 | Ultraform® H20-00 von Ultraform GmbH | Irganox® 245 FF von Ciba Geigy | Melamin-Formaldehyd-Kondensat gemäß DE-PS-25 40 207 | Suspensions-Perlpolymerisat gemäß 2.2.1 |
| V4a | (99,45) | (0,35) | (0,2) | (0,05) |
| V4b | (99,45) | (0,35) | (0,2) | (0,10) |
| V4c | (99,45) | (0,35) | (0,2) | (0,20) |
| V4d | (99,45) | (0,35) | (0,2) | (0,30) |
| V4e | (99,45) | (0,35) | (0,2) | (0,50) |

Tabelle 2 fortgesetzt

| Bsp. Nr. | Komponente (i) | Zusammensetzung in Gew.-% der Komponente (ii) | | | | Polymeres Material (iii) |
|---|---|---|---|---|---|---|
| | | (ii) | (ii) | (ii) | (ii) | |
| V5 | Ultraform® H20-00 von Ultraform GmbH | Irganox 245 FF von Ciba-Geigy | Melamin-Formaldehyd-Kondensat gemäß DE-PS-25 40 207 | Fettsäure-ester Loxiol VP 1206 von Henkel | Magnesium-silikat Ambosol von Hoechst AG | Ultramid 1C von BASF AG |
| V5a | (99,30) | (0,35) | (0,20) | (0,10) | (0,05) | (0,04) |
| | | | | | | |
| V6 | Ultraform® N20-00 von Ultraform GmbH | Irganox 245 FF von Ciba-Geigy | Melamin-Formaldehyd-Kondensat gemäß DE-PS-25 40 207 | Magnesium-silikat Ambosol von Hoechst AG | TPU Elastollan B85A von Elastogran | Ultramid 1C von BASF AG |
| V6a | (89,40) | (0,35) | (0,20) | (0,05) | (10,00) | (0,04) |
| V6b | (79,40) | (0,35) | (0,20) | (0,05) | (20,00) | (0,04) |
| V6c | (69,40) | (0,35) | (0,20) | (0,05) | (30,00) | (0,04) |

Tabelle 2 fortgesetzt

| Bsp. Nr. | Komponente (i) | Zusammensetzung in Gew.-% der Komponente (ii) | | Polymeres Material (iii) |
|---|---|---|---|---|
| | | (ii) | (ii) | |
| B | Ultraform® H20-00 von Ultraform GmbH | Irganox® 245 FF von Ciba Geigy | Melamin-Formaldehyd-Kondensat gemäß DE-PS-25 40 207 | erfindungsgem. Copolymerisat B |
| B1a | (99,45) | (0,35) | (0,2) | (0,05) |
| B1b | (99,45) | (0,35) | (0,2) | (0,10) |
| B1c | (99,45) | (0,35) | (0,2) | (0,20) |
| B1d | (99,45) | (0,35) | (0,2) | (0,30) |
| B2a | (99,45) | (0,35) | (0,2) | (0,05) |
| B2b | (99,45) | (0,35) | (0,2) | (0,10) |
| B2c | (99,45) | (0,35) | (0,2) | (0,20) |
| B2d | (99,45) | (0,35) | (0,2) | (0,30) |

Tabelle 2 fortgesetzt

| Bsp. Nr. | Komponente (i) | Zusammensetzung in Gew.-% der Komponente (ii) | | Polymeres Material (iii) |
|---|---|---|---|---|
| | | (ii) | (ii) | |
| B | Ultraform® H20-00 von Ultraform GmbH | Irganox® 245 FF von Ciba Geigy | Melamin-Formaldehyd-Kondensat gemäß DE-PS-25 40 207 | erfindungsgem. Copolymerisat B |
| B4a | (99,45) | (0,35) | (0,2) | (0,05) |
| B4b | (99,45) | (0,35) | (0,2) | (0,10) |
| B4c | (99,45) | (0,35) | (0,2) | (0,20) |
| B4d | (99,45) | (0,35) | (0,2) | (0,30) |
| B5a | (99,45) | (0,35) | (0,2) | (0,05) |
| B5b | (99,45) | (0,35) | (0,2) | (0,10) |
| B5c | (99,45) | (0,35) | (0,2) | (0,20) |
| B5d | (99,45) | (0,35) | (0,2) | (0,30) |
| B5e | (99,45) | (0,35) | (0,2) | (0,50) |

Tabelle 2 fortgesetzt

| Bsp. Nr. | Komponente (i) | Zusammensetzung in Gew.-% der Komponente (ii) | | Polymeres Material |
|---|---|---|---|---|
| | | (ii) | (ii) | (iii) |
| B | Ultraform® H20-00 von Ultraform GmbH | Irganox® 245 FF von Ciba Geigy | Melamin-Formaldehyd-Kondensat gemäß DE-PS-25 40 207 | erfindungsgem. Copolymerisat B |
| B6a | (99,45) | (0,35) | (0,2) | (0,05) |
| B6b | (99,45) | (0,35) | (0,2) | (0,10) |
| B6c | (99,45) | (0,35) | (0,2) | (0,20) |
| B6d | (99,45) | (0,35) | (0,2) | (0,30) |
| B7a | (99,45) | (0,35) | (0,2) | (0,05) |
| B7b | (99,45) | (0,35) | (0,2) | (0,10) |
| B7c | (99,45) | (0,35) | (0,2) | (0,20) |
| B7d | (99,45) | (0,35) | (0,2) | (0,30) |
| B7e | (99,45) | (0,35) | (0,2) | (0,50) |
| B8 | (99,45) | (0,35) | (0,2) | (0,10) |

Tabelle 2 fortgesetzt

| Bsp. Nr. | Komponente (i) | Zusammensetzung in Gew.-% der Komponente (ii) | | Polymeres Material (iii) |
|---|---|---|---|---|
| | | (ii) | (ii) | |
| B | Ultraform® H20-00 von Ultraform GmbH | Irganox® 245 FF von Ciba Geigy | Melamin-Formaldehyd-Kondensat gemäß DE-PS-25 40 207 | erfindungsgem. Copolymerisat B |
| B15 | (99,45) | (0,35) | (0,2) | (0,10) |
| B16 | (99,45) | (0,35) | (0,2) | (0,10) |
| B19 | (99,45) | (0,35) | (0,2) | (0,10) |
| B20 | (99,45) | (0,35) | (0,2) | (0,10) |

Tabelle 2 fortgesetzt

| Bsp. Nr. | Komponente (i) | Zusammensetzung in Gew.-% der Komponente (ii) | | Polymeres Material |
|---|---|---|---|---|
| | | (ii) | (ii) | (iii) |
| B | Ultraform® H20-00 von Ultraform GmbH | Irganox® 245 FF von Ciba Geigy | Melamin-Formaldehyd-Kondensat gemäß DE-PS-25 40 207 | erfindungsgem. Copolymerisat B |
| B21 | (99,45) | (0,35) | (0,2) | (0,10) |
| B22 | (99,45) | (0,35) | (0,2) | (0,10) |
| B23 | (99,45) | (0,35) | (0,2) | (0,10) |
| B25 | (99,45) | (0,35) | (0,2) | (0,10) |
| B26 | (99,45) | (0,35) | (0,2) | (0,10) |
| B27 | (99,45) | (0,35) | (0,2) | (0,10) |
| B28 | (99,45) | (0,35) | (0,2) | (0,10) |
| B29 | (99,45) | (0,35) | (0,2) | (0,10) |
| B30 | (99,45) | (0,35) | (0,2) | (0,10) |
| B31 | (99,45) | (0,35) | (0,2) | (0,10) |
| B32 | (99,45) | (0,35) | (0,2) | (0,10) |

Tabelle 2 fortgesetzt

| Bsp. Nr. | Komponente (i) | Zusammensetzung in Gew.-% der Komponente (ii) | | Polymeres Material (iii) |
|---|---|---|---|---|
| | | (ii) | (ii) | |
| B | Ultraform® H20-00 von Ultraform GmbH | Irganox® 245 FF von Ciba Geigy | Melamin-Formaldehyd-Kondensat gemäß DE-PS-25 40 207 | erfindungsgem. Copolymerisat B |
| B33 | (99,45) | (0,35) | (0,2) | (0,10) |
| B34 | (99,45) | (0,35) | (0,2) | (0,10) |
| B35 | (99,45) | (0,35) | (0,2) | (0,10) |
| B36a | (99,45) | (0,35) | (0,2) | (0,50) |
| B36b | (99,45) | (0,35) | (0,2) | (1,00) |
| B36c | (99,45) | (0,35) | (0,2) | (5,00) |
| B36d | (99,45) | (0,35) | (0,2) | (10,00) |
| B37 | (99,45) | (0,35) | (0,2) | (0,10) |
| B38 | (99,45) | (0,35) | (0,2) | (0,10) |
| B39 | (99,45) | (0,35) | (0,2) | (0,10) |
| B40 | (99,45) | (0,35) | (0,2) | (0,10) |
| B41 | (99,45) | (0,35) | (0,2) | (0,10) |

Tabelle 2 fortgesetzt

| Bsp. Nr. | Komponente (i) | Zusammensetzung in Gew.-% der Komponente (ii) | | Polymeres Material (iii) |
|---|---|---|---|---|
| | | (ii) | (ii) | |
| B | Ultraform® H20-00 von Ultraform GmbH | Irganox® 245 FF von Ciba Geigy | Melamin-Formaldehyd-Kondensat gemäß DE-PS-25 40 207 | erfindungsgem. Copolymerisat B |
| B42 | (99,45) | (0,35) | (0,2) | (0,10) |
| B43 | (99,45) | (0,35) | (0,2) | (0,10) |
| B44 | (99,45) | (0,35) | (0,2) | (0,10) |
| B45 | (99,45) | (0,35) | (0,2) | (0,10) |
| B46 | (99,45) | (0,35) | (0,2) | (0,10) |

Tabelle 2 fortgesetzt

| Bsp. Nr. | Komponente (i) | Zusammensetzung in Gew.-% der Komponente (ii) | | | | Polymeres Material (iii) |
|---|---|---|---|---|---|---|
| | | (ii) | (ii) | (ii) | (ii) | |
| B | Ultraform® H20-00 von Ultraform GmbH | Irganox 245 FF von Ciba-Geigy | Melamin-Formaldehyd-Kondensat gemäß DE-PS-25 40 207 | Fettsäureester Loxiol VP 1206 von Henkel | Magnesium-silikat Ambosol von Hoechst AG | erfindungs-gem. Copolyme-risat B |
| B1e | (99,40) | (0,35) | (0,20) | (0,05) | - | (0,10) |
| B1f | (99,35) | (0,35) | (0,20) | (0,10) | - | (0,10) |
| B1g | (99,25) | (0,35) | (0,20) | (0,20) | - | (0,10) |
| B1h | (99,15) | (0,35) | (0,20) | (0,30) | - | (0,10) |
| B1i | (98,95) | (0,35) | (0,20) | (0,50) | - | (0,10) |
| B1j | (99,30) | (0,35) | (0,20) | (0,10) | (0,05) | (0,10) |
| B1k | (99,25) | (0,35) | (0,20) | (0,10) | (0,10) | (0,10) |
| B51a | (99,45) | (0,35) | (0,20) | - | - | (0,10) |
| B51b | (99,35) | (0,35) | (0,20) | (0,10) | - | (0,10) |
| B51c | (99,25) | (0,35) | (0,20) | (0,20) | - | (0,10) |
| B51d | (99,15) | (0,35) | (0,20) | (0,30) | - | (0,10) |
| B51e | (99,30) | (0,35) | (0,20) | (0,10) | (0,05) | (0,10) |
| B51f | (99,25) | (0,35) | (0,20) | (0,10) | (0,10) | (0,10) |

Tabelle 2 fortgesetzt

| Bsp. Nr. | Komponente (i) | Zusammensetzung in Gew.-% der Komponente (ii) | | | | Polymeres Material (iii) |
|---|---|---|---|---|---|---|
| | | (ii) | (ii) | (ii) | (ii) | |
| B | Ultraform® H20-00 von Ultraform GmbH | Irganox 245 FF von Ciba-Geigy | Melamin-Formaldehyd-Kondensat gemäß DE-PS-25 40 207 | Fettsäureester Loxiol VP 1206 von Henkel | Magnesium-silikat Ambosol von Hoechst AG | erfindungs-gem. Copolyme-risat B |
| B52 | (99,45) | (0,35) | (0,20) | - | - | (0,10) |
| B53 | (99,45) | (0,35) | (0,20) | - | - | (0,10) |
| B54 | (99,45) | (0,35) | (0,20) | - | - | (0,10) |
| B55 | (99,45) | (0,35) | (0,20) | - | - | (0,30) |
| B56 | (99,45) | (0,35) | (0,20) | - | - | (0,10) |
| | | | | | | |
| B | Ultraform® H20-00 von Ultraform GmbH | Irganox 259 von Ciba-Geigy | Melamin-Formaldehyd-Kondensat gemäß DE-PS-25 40 207 | Fettsäureester Loxiol VP 1206 von Henkel | Magnesium-silikat Ambosol von Hoechst AG | erfindungs-gem. Copolyme-risat B |
| B11 | (99,45) | (0,35) | (0,20) | - | - | (0,10) |
| B1m | (99,40) | (0,40) | (0,20) | - | - | (0,10) |

Tabelle 2 fortgesetzt

| Bsp. Nr. | Komponente (i) | Zusammensetzung in Gew.-% der Komponente (ii) | | | | Polymeres Material |
|---|---|---|---|---|---|---|
| | | (ii) | (ii) | (ii) | (ii) | (iii) |
| B | Ultraform® N20-00 von Ultraform GmbH | Irganox 245 FF von Ciba-Geigy | Melamin-Formaldehyd-Kondensat gemäß DE-PS-25 40 207 | Fettsäureester Loxiol VP 1206 von Henkel | TPU Elastollan B85A von Elastogran | erfindungs-gem. Copolymerisat B |
| B1n | (89,35) | (0,35) | (0,20) | (0,10) | (10,00) | (0,10) |
| B1o | (79,35) | (0,35) | (0,20) | (0,10) | (20,00) | (0,10) |
| B1p | (69,35) | (0,35) | (0,20) | (0,10) | (30,00) | (0,10) |

TPU = thermoplastisches Polyurethan

Tabelle 2 fortgesetzt

| Bsp. Nr. | Komponente (i) | Zusammensetzung in Gew.-% der Komponente (ii) | | | | Polymeres Material (iii) |
|---|---|---|---|---|---|---|
| | | (ii) | (ii) | (ii) | (ii) | |
| B | Ultraform® H20-00 von Ultraform GmbH | Irganox 245 FF von Ciba-Geigy | Melamin-Formaldehyd-Kondensat gemäß DE-PS-25 40 207 | Ruß Printex 90 von Degussa | Kaliumcarbonat | erfindungsgem. Copolymerisat B |
| B1q | (99,1885) | (0,35) | (0,20) | (0,25) | (0,0115) | (0,20) |
| B1r | (99,1885) | (0,35) | (0,20) | (0,25) | (0,0115) | (0,30) |
| B1s | (99,1885) | (0,35) | (0,20) | (0,25) | (0,0115) | (0,50) |
| B23a | (99,20) | (0,35) | (0,20) | (0,25) | (0) | (0,20) |
| B23b | (99,195) | (0,35) | (0,20) | (0,25) | (0,005) | (0,20) |

Tabelle 2 fortgesetzt

| Bsp. Nr. | Komponente (i) | Zusammensetzung in Gew.-% der Komponente (ii) | | Polymeres Material |
|---|---|---|---|---|
| | | (ii) | (ii) | (iii) |
| B | Ultraform® H20-00 von Ultraform GmbH | Irganox 259 von Ciba-Geigy | Melamin-Formaldehyd-Kondensat gemäß DE-PS-25 40 207 | erfindungsgem. Copolymerisat B |
| B1t | (99,60) | (0,20) | (0,20) | (0,10) |
| B1u | (99,45) | (0,35) | (0,20) | (0,10) |

Erläuterungen:

®Ultraform H20-00 ist ein thermisch nicht abgebautes Polyoxymethylen-Copolymerisat

®Irganox 245 FF ist ein Antioxidans

MFK gemäß DE-PS 25 40 207 ist ein Nukleierungsmittel

®Ambosol ist ein Costabilisator

®Ultramid 1C ist ein Mischpolyamid, Thermostabilisator

Tabelle 3

Thermische Stabilität, Schmelzeviskosität sowie CieLab-Farbkoordinaten der nicht erfindungsgemäßen (Vergleichsbeispiele V1 bis V6) und der erfindungsgemäßen (Beispiele B1 bis B56) Formmassen.

| Bsp. Nr. | Thermische Stabilität | | | | Schmelzeviskosität | CieLab-Farbkoordinaten nach Extrusion | | |
|---|---|---|---|---|---|---|---|---|
| | GV (N2) Gew.-% | | GV (Luft) Gew.-% | | MVR [$cm^3$/10 min] | L* | a* | b* |
| | 2 h | 16 h | 2 h | 6 h | | | | |
| V1 | 0,32 | 2,63 | 2,75 | 17,80 | 2,60 | 87,49 | -0,74 | 3,18 |
| V2a | 1,00 | - | 7,62 | - | 2,50 | 81,93 | -3,33 | 2,03 |
| V2b | 1,28 | - | 8,87 | - | 2,70 | 82,58 | -2,95 | 2,21 |
| V2c | 1,27 | - | 7,20 | - | 2,30 | 83,69 | -2,71 | 2,61 |
| V2d | 1,23 | - | 6,46 | - | 2,40 | 83,77 | -2,95 | 2,69 |
| V2e | 1,29 | - | 6,50 | - | 2,80 | 84,40 | -2,79 | 2,92 |
| V3a | 0,37 | - | 8,70 | - | 2,40 | 84,83 | -2,16 | 2,87 |
| V3b | 0,49 | - | 7,92 | - | 2,50 | 83,44 | -2,48 | 3,03 |

Tabelle 3 fortgesetzt

| Bsp. Nr. | Thermische Stabilität | | | | Schmelze-viskosität | CieLab-Farbkoordinaten nach Extrusion | | |
|---|---|---|---|---|---|---|---|---|
| | GV (N2) Gew.-% | | GV (Luft) Gew.-% | | MVR [cm³/10 min] | L* | a* | b* |
| | 2 h | 16 h | 2 h | 6 h | | | | |
| V3c | 0,64 | - | 8,04 | - | 2,60 | 83,72 | -2,54 | 2,56 |
| V3d | 0,78 | - | 9,05 | - | 2,90 | 82,83 | -2,40 | 2,27 |
| V4a | 0,81 | - | 8,54 | - | 2,80 | 84,24 | -2,43 | 3,00 |
| V4b | 1,06 | - | 7,85 | - | 2,40 | 83,45 | -2,77 | 3,28 |
| V4c | 1,19 | - | 7,63 | - | 2,60 | 83,33 | -2,69 | 3,37 |
| V4d | 1,10 | - | 6,93 | - | 2,60 | 84,37 | -2,83 | 3,19 |
| V4e | 0,87 | - | 6,17 | - | 2,80 | 84,99 | -2,96 | 3,49 |
| V5a | 0,21 | 2,45 | 1,82 | 9,42 | 3,3 | 88,52 | -0,83 | 3,06 |
| V6a | 0,31 | n. b. | 0,92 | n. b. | 6,9 | 90,11 | -1,35 | 4,31 |
| V6b | 0,27 | n. b. | 1,19 | n. b. | 6,2 | 89,46 | -1,29 | 4,94 |
| V6c | 0,24 | n. b. | 0,71 | n. b. | 5,9 | 89,23 | -1,55 | 5,85 |

Tabelle 3 fortgesetzt

| Bsp. Nr. | Thermische Stabilität | | | | Schmelze-viskosität | CieLab-Farbkoordinaten nach Extrusion | | |
|---|---|---|---|---|---|---|---|---|
| | GV (N2) Gew.-% | | GV (Luft) Gew.-% | | MVR [$cm^3$/10 min] | L* | a* | b* |
| | 2 h | 16 h | 2 h | 6 h | | | | |
| B1a | 0,11 | 2,49 | 1,26 | 13,7 | 2,80 | 90,06 | -1,08 | 1,06 |
| B1b | 0,09 | 1,82 | 1,19 | 7,6 | 2,60 | 89,98 | -1,06 | 0,90 |
| B1c | 0,08 | 1,64 | 1,04 | 6,7 | 2,50 | 89,93 | -1,11 | 1,41 |
| B1d | 0,06 | 1,38 | 1,05 | 11,3 | 2,50 | 90,10 | -1,11 | 1,02 |
| B2a | 0,14 | 2,34 | 1,51 | 13,50 | 2,60 | 82,40 | -3,55 | 1,84 |
| B2b | 0,07 | 1,73 | 1,01 | 7,65 | 2,60 | 83,06 | -3,46 | 1,52 |
| B2c | 0,10 | 1,55 | 0,99 | 6,79 | 2,30 | 82,91 | -3,34 | 1,57 |
| B2d | 0,07 | 1,53 | 1,05 | 14,70 | 2,30 | 90,05 | -1,20 | 1,31 |

Tabelle 3 fortgesetzt

| Bsp. Nr. | Thermische Stabilität | | | | Schmelze-viskosität | CieLab-Farbkoordinaten nach Extrusion | | |
|---|---|---|---|---|---|---|---|---|
| | GV (N2) Gew.-% | | GV (Luft) Gew.-% | | MVR [$cm^3$/10 min] | L* | a* | b* |
| | 2 h | 16 h | 2 h | 6 h | | | | |
| B4a | 0,13 | 2,45 | 1,82 | 16,84 | 2,40 | 89,69 | -1,12 | 1,64 |
| B4b | 0,05 | 2,21 | 1,26 | 9,77 | 2,50 | 89,91 | -1,08 | 1,20 |
| B4c | 0,05 | 2,03 | 1,10 | 7,89 | 2,40 | 89,24 | -1,11 | 1,34 |
| B4d | 0,08 | 1,56 | 0,93 | 9,61 | 2,20 | 89,74 | -1,17 | 1,51 |
| B5a | 0,16 | 2,42 | 2,11 | 16,36 | 2,60 | 89,31 | -1,10 | 1,14 |
| B5b | 0,12 | 2,16 | 1,68 | 13,00 | 2,60 | 89,32 | -1,10 | 1,35 |
| B5c | 0,09 | 2,03 | 1,16 | 8,43 | 2,40 | 89,50 | -1,07 | 1,30 |
| B5d | 0,09 | 1,76 | 0,90 | 6,31 | 2,40 | 89,21 | -1,11 | 1,47 |
| B5e | 0,07 | 1,69 | 0,94 | 10,24 | 2,30 | 89,50 | -1,11 | 1,45 |
| B6a | 0,08 | 2,04 | 1,39 | 12,45 | 2,50 | 88,89 | -0,98 | 1,76 |
| B6b | 0,07 | 1,83 | 1,19 | 8,99 | 2,50 | 89,74 | -1,11 | 1,36 |
| B6c | 0,08 | 1,72 | 1,10 | 6,81 | 2,30 | 89,81 | -1,17 | 1,57 |

Tabelle 3 fortgesetzt

| Bsp. Nr. | Thermische Stabilität | | | | Schmelze-viskosität | CieLab-Farbkoordinaten nach Extrusion | | |
|---|---|---|---|---|---|---|---|---|
| | GV (N2) Gew.-% | | GV (Luft) Gew.-% | | MVR [$cm^3$/10 min] | L* | a* | b* |
| | 2 h | 16 h | 2 h | 6 h | | | | |
| B7a | 0,09 | 2,26 | 2,23 | 17,47 | 2,40 | 89,02 | -1,09 | 1,59 |
| B7b | 0,09 | 2,31 | 2,15 | 15,66 | 2,30 | 89,25 | -1,12 | 1,52 |
| B7c | 0,06 | 1,87 | 1,43 | 9,77 | 2,10 | 89,20 | -1,12 | 1,31 |
| B7d | 0,06 | 1,92 | 1,00 | 8,14 | 2,20 | 89,50 | -1,12 | 1,48 |
| B7e | 0,05 | 1,54 | 0,93 | 7,02 | 1,80 | 89,04 | -1,12 | 1,75 |
| B8 | 0,14 | 2,35 | 1,67 | 13,60 | 2,40 | 89,32 | -1,14 | 1,50 |

Tabelle 3 fortgesetzt

| Bsp. Nr. | Thermische Stabilität | | | | Schmelze-viskosität | CieLab-Farbkoordinaten nach Extrusion | | |
|---|---|---|---|---|---|---|---|---|
| | GV (N2) Gew.-% | | GV (Luft) Gew.-% | | MVR [$cm^3$/10 min] | L* | a* | b* |
| | 2 h | 16 h | 2 h | 6 h | | | | |
| B15 | 0,15 | 2,31 | 1,33 | 12,40 | 2,60 | 89,66 | -1,16 | 2,41 |
| B16 | 0,11 | 2,31 | 1,81 | 15,80 | 2,50 | 89,80 | -1,26 | 1,60 |
| B19 | 0,05 | 2,11 | 1,33 | 9,79 | 2,50 | 89,40 | -1,18 | 1,45 |
| B20 | 0,06 | 2,07 | 1,57 | 11,90 | 2,50 | 89,51 | -1,12 | 1,75 |
| B21 | 0,12 | 2,11 | 1,87 | 15,50 | 2,40 | 89,06 | -1,08 | 1,59 |
| B22 | 0,10 | 2,16 | 1,56 | 16,30 | 2,20 | 89,47 | -1,22 | 1,70 |
| B23 | 0,09 | 1,77 | 1,21 | 9,39 | 2,60 | 89,57 | -1,15 | 2,54 |
| B25 | 0,11 | 2,46 | 1,69 | 13,90 | 2,60 | 89,66 | -1,20 | 1,43 |
| B26 | 0,14 | 2,41 | 1,58 | 15,50 | 2,60 | 89,74 | -1,19 | 1,51 |

Tabelle 3 fortgesetzt

| Bsp. Nr. | Thermische Stabilität | | | | Schmelzeviskosität | CieLab-Farbkoordinaten nach Extrusion | | |
|---|---|---|---|---|---|---|---|---|
| | GV (N2) Gew.-% | | GV (Luft) Gew.-% | | MVR [$cm^3$/10 min] | L* | a* | b* |
| | 2 h | 16 h | 2 h | 6 h | | | | |
| B27 | 0,11 | 2,05 | 1,48 | 11,70 | 2,30 | 89,09 | -1,24 | 3,38 |
| B28 | 0,11 | 2,24 | 1,43 | 12,74 | 2,60 | 89,41 | -1,27 | 2,53 |
| B29 | 0,15 | 2,50 | 1,43 | 14,03 | 2,60 | 89,55 | -1,26 | 2,02 |
| B30 | 0,12 | 2,07 | 1,49 | 13,50 | 2,20 | 89,53 | -1,25 | 2,00 |
| B31 | 0,18 | 2,59 | 2,08 | 16,90 | 2,30 | 89,35 | -1,20 | 2,16 |
| B32 | 0,13 | 2,53 | 1,97 | 15,30 | 2,40 | 89,75 | -1,22 | 1,81 |
| B33 | 0,15 | 2,28 | 1,37 | 16,10 | 2,30 | 89,48 | -1,23 | 1,97 |
| B34 | 0,13 | 2,47 | 1,97 | 16,90 | 2,40 | 89,70 | -1,33 | 2,17 |
| B35 | 0,08 | 2,48 | 1,79 | 16,20 | 2,60 | 89,75 | -1,26 | 1,64 |
| B36a | 0,08 | 1,24 | 1,24 | 36,40 | 2,10 | 87,08 | -0,76 | 2,35 |
| B36b | 0,10 | 1,24 | 4,95 | 67,80 | 2,00 | 89,05 | -1,10 | 2,21 |

Tabelle 3 fortgesetzt

| Bsp. Nr. | Thermische Stabilität | | | | Schmelze-viskosität | CieLab-Farbkoordinaten nach Extrusion | | |
|---|---|---|---|---|---|---|---|---|
| | GV (N2) Gew.-% | | GV (Luft) Gew.-% | | MVR [$cm^3$/10 min] | L* | a* | b* |
| | 2 h | 16 h | 2 h | 6 h | | | | |
| B36c | 0,15 | 1,91 | 0,77 | 44,10 | 1,90 | 88,55 | -1,43 | 5,01 |
| B36d | 0,28 | 3,58 | 1,62 | 57,10 | 1,30 | 84,90 | -1,54 | 8,38 |
| B37 | 0,15 | 2,31 | 1,33 | 12,40 | 2,60 | 89,66 | -1,16 | 2,41 |
| B38 | 0,11 | 2,59 | 1,30 | 12,50 | 2,80 | 89,65 | -1,09 | 2,05 |
| B39 | 0,23 | 2,82 | 2,21 | 19,70 | 3,10 | 90,02 | -1,18 | 2,02 |
| B40 | 0,39 | 2,75 | 2,09 | 15,90 | 3,10 | 89,54 | -1,16 | 1,60 |
| B41 | 0,23 | 2,69 | 2,11 | 17,10 | 3,00 | 89,45 | -1,21 | 2,01 |
| B42 | 0,17 | 2,73 | 1,75 | 11,50 | 2,90 | 89,39 | -1,14 | 2,16 |
| B43 | 0,16 | 2,69 | 1,55 | 13,10 | 2,90 | 87,15 | -0,92 | 2,64 |
| B44 | 0,41 | 3,04 | 1,82 | 13,90 | 2,90 | 89,17 | -1,02 | 2,04 |
| B45 | 0,32 | 3,07 | 1,45 | 13,30 | 2,70 | 88,54 | -1,02 | 2,41 |
| B46 | 0,15 | 2,92 | 1,38 | 10,70 | 2,50 | 87,06 | -1,02 | 2,58 |

Tabelle 3 fortgesetzt

| Bsp. Nr. | Thermische Stabilität | | | | Schmelzeviskosität | CieLab-Farbkoordinaten nach Extrusion | | |
|---|---|---|---|---|---|---|---|---|
| | GV (N2) Gew.-% | | GV (Luft) Gew.-% | | MVR [$cm^3$/10 min] | L* | a* | b* |
| | 2 h | 16 h | 2 h | 6 h | | | | |
| B1e | 0,11 | 2,26 | 2,43 | 21,87 | 2,6 | 89,92 | -1,17 | 1,53 |
| B1f | 0,10 | 2,00 | 1,73 | 11,96 | 2,6 | 90,11 | -1,18 | 1,70 |
| B1g | 0,17 | 2,08 | 2,13 | 12,00 | 2,7 | 90,90 | -1,18 | 1,93 |
| B1h | 0,22 | 2,38 | 2,39 | n. b. | 2,7 | 90,85 | -1,13 | 2,23 |
| B1i | 0,29 | 4,33 | 2,21 | n. b. | 2,7 | 90,87 | -1,07 | 2,54 |
| B1j | 0,13 | 2,12 | 1,45 | 11,21 | 2,6 | 89,72 | -1,08 | 2,00 |
| B1k | 0,08 | 2,07 | 1,47 | 9,27 | 2,4 | 89,13 | -0,98 | 2,20 |
| B1l | 0,03 | 1,14 | 1,19 | 12,30 | 2,3 | 89,52 | -1,31 | 2,04 |
| B1m | 0,05 | 1,25 | 1,09 | 9,71 | 2,2 | 89,37 | -1,32 | 2,09 |
| B1n | 0,55 | 1,15 | 1,44 | 4,12 | 7,8 | 89,14 | -1,32 | 2,53 |
| B1o | 0,63 | 1,39 | 1,38 | 3,74 | 7,0 | 89,45 | -1,61 | 4,46 |
| B1p | 0,58 | 1,37 | 1,39 | 3,35 | 6,0 | 88,83 | -1,71 | 5,38 |
| B1q | 0,20 | n. b. | 2,22 | n. b. | 2,6 | - | - | - |

Tabelle 3 fortgesetzt

| Bsp. Nr. | Thermische Stabilität | | | | Schmelzeviskosität | CieLab-Farbkoordinaten nach Extrusion | | |
|---|---|---|---|---|---|---|---|---|
| | GV (N2) Gew.-% | | GV (Luft) Gew.-% | | MVR [$cm^3$/10 min] | L* | a* | b* |
| | 2 h | 16 h | 2 h | 6 h | | | | |
| B1r | 0,18 | n. b. | 1,90 | n. b. | 2,6 | - | - | - |
| B1s | 0,16 | n. b. | 1,48 | n. b. | 2,5 | - | - | - |
| B1t | 0,05 | 1,21 | 2,32 | 14,30 | 2,5 | 89,55 | -1,25 | 1,69 |
| B1u | 0,03 | 1,14 | 1,19 | 12,30 | 2,3 | 89,52 | -1,31 | 2,04 |
| B23a | 0,30 | n. b. | 1,88 | n. b. | 2,4 | - | - | - |
| B23b | 0,22 | n. b. | 1,67 | n. b. | 2,3 | - | - | - |
| B47 | 0,13 | 2,50 | 1,80 | 16,90 | 2,5 | 88,21 | -0,96 | 1,18 |
| B48 | 0,14 | 2,58 | 1,57 | 18,50 | 2,8 | 89,54 | -1,13 | 1,47 |
| B49 | 0,11 | 2,29 | 1,28 | 8,62 | 2,9 | 89,81 | 1,11 | 1,70 |
| B50 | 0,10 | 2,29 | 1,38 | 8,74 | 3,2 | 89,52 | -1,12 | 1,29 |
| B51a | 0,10 | 2,27 | 1,82 | 17,11 | 2,2 | 89,30 | -1,19 | 1,64 |
| B51b | 0,14 | 2,12 | 1,50 | 20,88 | 2,2 | 89,53 | -1,17 | 1,65 |
| B51c | 0,23 | 2,20 | 1,89 | 24,32 | 2,5 | 90,65 | -1,21 | 1,84 |
| B51d | 0,35 | 2,12 | 1,91 | 13,23 | 2,5 | 91,20 | -1,15 | 2,25 |

Tabelle 3 fortgesetzt

| Bsp. Nr. | Thermische Stabilität GV (N2) Gew.-% 2 h | | GV (Luft) Gew.-% 2 h | | Schmelzeviskosität MVR [$cm^3$/10 min] | CieLab-Farbkoordinaten nach Extrusion | | |
|---|---|---|---|---|---|---|---|---|
| | 2 h | 16 h | 2 h | 6 h | | L* | a* | b* |
| B51e | 0,15 | 2,11 | 1,37 | 13,28 | 2,3 | 89,28 | -1,00 | 1,96 |
| B51f | 0,10 | 1,29 | 2,10 | 9,90 | 2,4 | 89,27 | -0,97 | 2,25 |
| B52 | 0,12 | 2,03 | 1,54 | 18,85 | 2,4 | 89,45 | -1,22 | 1,61 |
| B53 | 0,09 | 2,01 | 1,62 | 12,86 | 2,4 | 89,48 | -1,23 | 1,65 |
| B54 | 0,24 | 2,28 | 1,36 | 24,10 | 2,6 | 89,04 | -1,17 | 2,45 |
| B55 | 0,08 | 1,65 | 1,25 | 9,07 | 2,6 | 89,31 | -1,17 | 1,44 |
| B56 | 0,14 | 2,49 | 2,10 | 14,30 | 2,8 | 89,51 | -1,17 | 1,62 |

Aus den Daten der Tabellen 2 und 3 ist ableitbar, daß die thermische Stabilität der gemäß der Erfindung stabilisierten Polyoxymethylen-Formmassen besser ist als die derjenigen Formmassen, die mit den nicht erfindungsgemäßen Copolymeren gemäß EP-A-0 381 943 Beispiel 1 und 2 der Zusammensetzung 75 Gew.-% Methylmethacrylat, 5 Gew.-% n-Butylacrylat und 20 Gew.-% Methacrylamid sowohl nach der Emusions- als auch nach der Suspensions-Perl-Polymerisationsmethode stabilisiert sind. Insbesondere zeigen die erfindungsgemäß stabilisierten Beispiele den geringeren Gewichtsverlust unter Luft nach 2, bzw. 6. Stunden. Zudem ist die Verfärbung (CieLab-Farbkoordinaten),

insbesondere die Gelbverfärbung (b*-Wert) deutlich geringer. Darüber hinaus ist die Helligkeit (L*-Wert) des erfindungsgemäß stabilisierten Granulates deutlich besser als bei den Vergleichsbeispielen V1 - V6. Auch führt die Anhebung der Zuschlagkonzentrationen bei den Vergleichsbeispielen V2 - V6 nicht zu einer wesentlichen Verbesserung der Thermostabilität, wie es ausnahmslos bei den erfindungsgemäßen Beispielen zu beobachten ist.

Erreicht werden die erwähnten Verbesserungen insbesondere dann wenn das erfindungsgemäße Co- oder Terpolymerisat, eine Tg von ≤ 145 °C, vorzugsweise ≤ 140 °C, aufweist.

Man kann somit bei dem erfindungsgemäß stabilisierten Beispielen behaupten, Polyoxymethylen-Formmassen mit verbesserter Thermostabilität und Verfärbungsstabilität vorliegen zu haben.

Ferner liegt der Zahlenwert des MVR der erfindungsgemäßen Beispiele unter dem der Vergleichsbeispiele, so daß man hier zusätzlich von einem positiven Effekt sprechen kann.

## Patentansprüche

**1.** Polyoxymethylen-Formmasse aufweisend

(i) mindestens ein Polyoxymethylen-Homo- und/oder Copolymerisat,

(ii) mindestens einen üblichen Zuschlagstoff und

(iii) mindestens ein polymeres Kunststoffmaterial als. Additiv zur Verbesserung der Thermostabilität,

**dadurch gekennzeichnet, daß**

(iii) ein Copolymerisat ist, welches durch Polymerisation in Substanz einer Mischung von

A) 60 - 90 Teilen ein oder mehrerer (Meth)acrylate,

B) 10 - 40 Teilen ein oder mehrerer (Meth)acrylamide,

C) bezogen auf 100 Teile A) + B) > 0,2 bis 5 Teilen Molekulargewichtsregler und

D) bezogen auf 100 Teile A) + B) bis zu 2 Teilen lipophile radikalische Polymerisationsinitiatoren,

erhältlich ist,
und daß

(iii) in einer Menge von 0,01 bis 2 Teilen bezogen auf die Summe von (i) + (ii)
in der Formmasse enthalten ist,
wobei sich alle Mengen auf Gewichtsteile (wt/wt) beziehen und A) und B) zusammen 100 Teile ergeben müssen.

**2.** Formmasse nach Anspruch 1 bestehend aus (i), (ii) und (iii).

**3.** Formmasse nach Anspruch 1 oder 2,
**dadurch gekennzeichnet, daß**

(iii) ein Copolymerisat ist, das durch Substanzpolymerisation einer Mischung erhältlich ist, worin

A) aus

A1) 35 - 90 Teilen ein oder mehrerer Methacrylate der allgemeinen Formel I

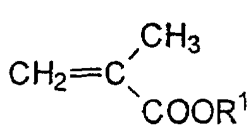

(I),

worin $R^1$ einen linearen oder verzweigten Alkylrest mit 1 bis 12 Kohlenstoffatomen bedeutet, und

A2) 0 - 25 Teilen ein oder mehrerer Acrylate der allgemeinen Formel II

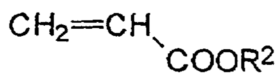 (II),

worin $R^2$ einen linearen oder verzweigten Alkylrest mit 1 bis 12 Kohlenstoffatomen bedeutet,

besteht,
wobei A1) und A2) zusammen 60-90 Teile ergeben und die Summe der Teile A1), A2) und B) 100 ergibt.

**4.** Formmasse nach Anspruch 3,
**dadurch gekennzeichnet, daß**
$R^1$ Methyl, Ethyl und/oder n-Propyl ist.

**5.** Formmasse nach Anspruch 3 oder 4,
**dadurch gekennzeichnet, daß**
$R^2$ n-Propyl, n-Butyl und/oder n-Pentyl ist.

**6.** Formmasse nach einem oder mehreren der vorhergehenden Ansprüche,
**dadurch gekennzeichnet, daß**

B) Acrylamid und/oder Methylacrylamid ist.

**7.** Formmasse nach einem oder mehreren der vorhergehenden Ansprüche,
**dadurch gekennzeichnet, daß**

C) n-Dodecylmercaptan ist.

**8.** Formmasse nach einem oder mehreren der vorhergehenden Ansprüche,
**dadurch gekennzeichnet, daß**

D) Laurylperoxid ist.

**9.** Formmasse nach einem oder mehreren der Ansprüche 3 - 8,
**dadurch gekennzeichnet, daß**

(iii) ein Copolymerisat ist, welches durch Substanzpolymerisation erhältlich ist von

35 - 90 Teilen A1),
0 - 25 Teilen A2),
10 - 40 Teilen B),
0,2 - 5 Teilen C) und
0,1 - 2 Teilen D),

wobei A1) + A2) + B) 100 Teile (wt/wt) ergeben müssen.

**10.** Formmasse nach Anspruch 9,
**dadurch gekennzeichnet, daß**
die Menge von A2) 0 Teile ist und daß

A1) Methylmethacrylat, B) Methacrylamid,
C) n-Dodecylmercaptan und D) Laurylperoxid ist.

**11.** Formmasse nach Anspruch 9,

**dadurch gekennzeichnet, daß**

A1) Methylmethacrylat, A2) n-Butylacrylat,
B) Methacrylamid, C) n-Dodecylmercaptan und
D) Laurylperoxid ist.

**12.** Formmasse nach einem der vorhergehenden Ansprüche,
**dadurch gekennzeichnet, daß**

(iii) in einer Menge von 0,02 - 1 Teil, vorzugsweise 0,05 - 0,5 Teilen, bezogen auf die Summe (i) + (ii) gerechnet als 100 Teile in der Formmasse enthalten ist.

**13.** Formmasse nach einem oder mehreren der vorhergehenden Ansprüche,
**dadurch gekennzeichnet, daß**

(iii) ein Co- oder Terpolymerisat ist, das eine Tg von ≤ 145 °C, vorzugsweise ≤ 140 °C, aufweist.

**14.** Verfahren zur Herstellung eines Formkörpers oder einer Folie aus einer Formmasse durch

(1) Aufschmelzen und Vermischen der Bestandteile der Formmasse auf einem Extruder bei 150 bis 260 °C
und

(2) formgebende Verarbeitung der hierdurch resultierenden Formmasse zu dem betreffenden Formkörper oder der betreffenden Folie,

**dadurch gekennzeichnet, daß**
man hierbei eine Formmasse verwendet, welche eine verstärkte oder unverstärkte Polyoxymethylen-Formmasse gemäß einem der Ansprüche 1 bis 13 enthält oder welche aus einer solchen Formmasse besteht.

**15.** Verwendung von Copolymerisaten, welche durch Substanzpolymerisation einer Mischung von

A) 60 - 90 Teilen ein oder mehrerer (Meth)acrylate,

B) 10 - 40 Teilen ein oder mehrerer (Meth)acrylamide,

C) bezogen auf 100 Teile A) + B) > 0,2 - 5 Teilen Molekulargewichtsregler
und

D) bezogen auf 100 Teile A) + B) bis zu 2 Teilen lipophile radikalische Polymerisationsinitiatoren

erhältlich sind,
wobei sich alle Mengen auf Gewichtsteile (wt/wt) beziehen und A) und B) so gewählt werden, daß sie zusammen 100 Teile ergeben,
zur thermischen Stabilisierung von Formmassen, welche Polyoxymethylen-Homo- und/oder Copolymerisate enthalten.

**16.** Verwendung nach Anspruch 15 von Copolymerisaten in einer Menge von 0,1 bis 2 Teilen bezogen auf 100 Teile Formmasse, wobei die 100 Teile ohne die zur thermischen Stabilisierung dienenden Copolymerisate gerechnet sind.

**17.** Formkörper und Halbzeug aus Formmasse gemäß den Ansprüchen 1 bis 13.

**18.** Folie aus Formmasse gemäß den Ansprüchen 1 bis 13.

## Claims

**1.** A polyoxymethylene molding composition comprising

(i) at least one polyoxymethylene homo- and/or copolymer,

(ii) at least one conventional additive, and

(iii) at least one polymer as additive for improving thermal stability,

wherein

(iii) is a copolymer obtainable by bulk polymerization of a mixture of

A) from 60 to 90 parts of one or more (meth)acrylates,

B) from 10 to 40 parts of one or more (meth)acrylamides,

C) based on 100 parts of A) + B), from > 0.2 to 5 parts of molecular-weight regulator, and

D) based on 100 parts of A) + B), up to 2 parts of lipophilic free-radical polymerization initiators,

and wherein
the amount of (iii) present in the molding composition is from 0.01 to 2 parts, based on the entirety of (i) + (ii), where all of the amounts are based on parts by weight (wt./wt.), and the entirety of A) and B) has to give 100 parts.

**2.** A molding composition as claimed in claim 1 composed of (i), (ii) and (iii).

**3.** A molding composition as claimed in claim 1 or 2,
wherein
(iii) is a copolymer obtainable by bulk polymerization of a mixture, where

A) is composed of

A1) from 35 to 90 parts of one or more methacrylates of the formula I

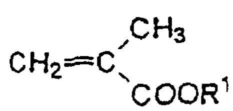

(I),

where $R^1$ is linear or branched alkyl having from 1 to 12 carbon atoms, and
A2) from 0 to 25 parts of one or more acrylates of the formula II

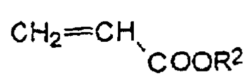

(II),

where $R^2$ is linear or branched alkyl having from 1 to 12 carbon atoms,

where A1) and A2) together give from 60 to 90 parts, and the entirety of the parts of A1), A2), and B) is 100.

**4.** A molding composition as claimed in claim 3,
wherein
$R^1$ is methyl, ethyl and/or n-propyl.

**5.** A molding composition as claimed in claim 3 or 4,

wherein
$R^2$ is n-propyl, n-butyl and/or n-pentyl.

**6.** A molding composition as claimed in one or more of the preceding claims, wherein

B) is acrylamide and/or methacrylamide.

**7.** A molding composition as claimed in one or more of the preceding claims, wherein

C) is n-dodecylmercaptan.

**8.** A molding composition as claimed in one or more of the preceding claims, wherein

D) is lauryl peroxide.

**9.** A molding composition as claimed in one or more of claims 3 to 8, wherein

iii) is a copolymer obtainable by bulk polymerization of

from 35 to 90 parts of A1),
from 0 to 25 parts of A2),
from 10 to 40 parts of B),
from 0.2 to 5 parts of C) and
from 0.1 to 2 parts of D),

where A1) + A2) + B) has to give 100 parts (wt./wt.).

**10.** A molding composition as claimed in claim 9, wherein the amount of A2) is 0 parts, and wherein

A1) is methyl methacrylate, B) is methacrylamide, C) is n-dodecylmercaptan and D) is lauryl peroxide.

**11.** A molding composition as claimed in claim 9, wherein

A1) is methyl methacrylate, A2) is n-butyl acrylate, B) is methacrylamide, C) is n-dodecylmercaptan, and D) is lauryl peroxide.

**12.** A molding composition as claimed in any of the preceding claims, wherein the amount of (iii) present in the molding composition is from 0.02 to 1 part, preferably from 0.05 to 0.5 parts, based on the entirety of (i) + (ii), calculated as 100 parts.

**13.** A molding composition as claimed in one or more of the preceding claims, wherein

(iii) is a co- or terpolymer which has a Tg of ≤ 145°C, preferably ≤ 140°C.

**14.** A process for the production of a molding or of a film made from a molding composition by

(1) melting and mixing the constituents of the molding composition in an extruder at from 150 to 260°C and

(2) molding the resultant molding composition to give the relevant molding or the relevant film,

which comprises
using for this purpose a molding composition which comprises a reinforced or unreinforced polyoxymethylene molding composition as claimed in any of claims 1 to 13, or which is composed of such a molding composition.

**15.** The use of copolymers obtainable by bulk polymerization of a mixture of

A) from 60 to 90 parts of one or more (meth)acrylates,

B) from 10 to 40 parts of one or more (meth)acrylamides,

C) based on 100 parts of A) + B), from > 0.2 to 5 parts of molecular-weight regulator,
and

D) based on 100 parts of A) + B), up to 2 parts of lipophilic free-radical polymerization initiators,

where all of the amounts are based on parts by weight (wt./wt.), and the entirety of A) and B) has to give 100 parts, for providing thermal stabilization to molding compositions which comprise polyoxymethylene homo- and/or copolymers.

**16.** The use as claimed in claim 15 of from 0.1 to 2 parts of copolymers, based on 100 parts of molding composition, where the 100 parts have been calculated without the copolymers serving for thermal stabilization.

**17.** A molding or a semifinished product made from a molding composition as claimed in any of claims 1 to 13.

**18.** A film made from a molding composition as claimed in any of claims 1 to 13.

## Revendications

**1.** Matière à mouler en polyoxyméthylène contenant

(i) au moins un homo- et/ou co-polymère de polyoxyméthylène,
(ii) au moins un additif usuel et
(iii) au moins une résine synthétique polymère en tant qu'additif améliorant la stabilité à la chaleur,

**caractérisée par le fait que**

(iii) est un copolymère obtenu par polymérisation en masse d'un mélange de

A) 60 à 90 parties d'un ou plusieurs (méth)acrylates,
B) 10 à 40 parties d'un ou plusieurs (méth)acrylamides,
C) >0,2 à 5 parties, pour 100 parties de A) + B), d'un régulateur du poids moléculaire, et
D) jusqu'à 2 parties, pour 100 parties A) + B), d'inducteurs de polymérisation radicalaires lipophiles,

et **par le fait que**
(iii) est contenu dans la matière à mouler en quantité de 0,01 à 2 parties par rapport à la somme de (i) + (ii), toutes les indiciations de quantités s'entendant en parties en poids, et A) et B) représentant ensemble 100 parties.

**2.** Matière à mouler selon la revendication 1,
consistant en (i), (ii) et (iii).

**3.** Matière à mouler selon l'une des revendications 1 ou 2,
**caractérisée par le fait que** (iii) est un copolymère obtenu par polymérisation en masse d'un mélange dans lequel

A) consiste en

A1) 35 à 90 parties d'un ou plusieurs méthacrylates de formule générale I

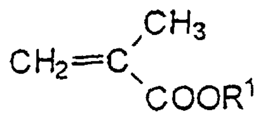 (I),

dans laquelle $R^1$ représente un groupe alkyle à chaîne droite ou ramifiée en C1-C12,
et
A2) 0 à 25 parties d'un ou plusieurs acrylates de formule générale II

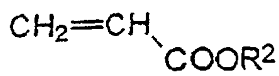 (II),

dans laquelle $R^2$ représente un groupe alkyle à chaîne droite ou ramifiée en C1-C12,

A1) et A2) représentant ensemble 60 à 90 parties et la somme des parties de A1), A2) et B) étant égal à 100.

**4.** Matière à mouler selon la revendication 3, **caractérisé par le fait que** $R^1$ représente un groupe méthyle, éthyle et/ou n-propyle.

**5.** Matière à mouler selon la revendication 3 ou 4, **caractérisé par le fait que** $R^2$ représente un groupe n-propyle, n-butyle et/ou n-pentyle.

**6.** Matière à mouler selon une ou plusieurs des revendications qui précèdent, **caractérisé par le fait que**

B) consiste en l'acrylamide et/ou le méthylacrylamide.

**7.** Matière à mouler selon une ou plusieurs des revendications qui précèdent, **caractérisée par le fait que**

C) consiste en le n-dodécylmercaptan.

**8.** Matière à mouler selon une ou plusieurs des revendications qui précèdent, **caractérisée par le fait que**

D) consiste en le peroxyde de lauryle.

**9.** Matière à mouler selon une ou plusieurs des revendications 3 à 8, **caractérisé par le fait que** (iii) est un copolymère obtenu par polymérisation en masse de

35 à 90 parties de A1),
0 à 25 parties de A2),
10 à 40 parties de B),
0,2 à 5 parties de C) et
0,1 à 2 parties de D),
A1) + (A2) + B) représentant au total 100 parties en poids.

**10.** Matière à mouler selon la revendication 9, **caractérisé par le fait que** la quantité de A2) est de 0 partie et **par le fait que** A1) consiste en le méthacrylate de méthyle, B) en le méthacrylamide, C) en le n-dodécylmercaptan et D) en le peroxyde de lauryle.

**11.** Matière à mouler selon la revendication 9, **caractérisée par le fait que**

A1) consiste en le méthacrylate de méthyle, A2) consiste en l'acrylate de n-butyle,
B) consiste en le méthacrylamide, C) consiste en le n-dodécylmercaptan et D) en le peroxyde de lauryle.

**12.** Matière à mouler selon l'une des revendications qui précèdent,
**cartactérisée par le fait que**
(iii) est contenu dans la matière à mouler en quantité de 0,02 à 1 partie, de préférence de 0,05 à 0,5 partie, par rapport à la somme (i) + (ii) comptée pour 100 parties.

**13.** Matière à mouler selon une ou plusieurs des revendications qui précèdent, **caractérisée par le fait que** (iii) est un copolymère ou un polymère ternaire présentant une température Tg ≤ à 145°C, de préférence ≤ à 140°C.

**14.** Procédé pour fabriquer un corps moulé ou une feuille à partir d'une matière à mouler par

(1) fusion et mélange des constituants de la matière à mouler sur une extrudeuse à des températures de 150 à 260°C et
2) façonnage de la matière à mouler ainsi obtenue en l'objet moulé en question ou la feuille en question,

**caractérisé par le fait que** l'on utilise à cet effet une matière à mouler qui contient une matière à mouler en polyoxyméthylène renforcée ou non selon une des revendications 1 à 13, ou consiste en une telle matière à mouler.

**15.** Utilisation des copolymères obtenus par polymérisation en masse d'un mélange de

A) 60 à 90 parties d'un ou plusieurs (méth)acrylates,
B) 10 à 40 parties d'un ou plusieurs (méth)acrylamides,
C) > 0,2 à 5 parties, pour 100 parties de A) + B), d'un régulateur du poids moléculaire
et
D) jusqu'à 2 parties, pour 100 parties de A) + B), d'inducteurs de polymérisation radicalaires lipophiles,

toutes les indications de quantité s'entendant en parties en poids et A) et B) étant choisis en sorte de représenter au total 100 parties,
pour la stabilisation à la chaleur de matières à mouler contenant des homo- et/ou copolymères de polyoxyméthylène.

**16.** Utilisation selon la revendication 15, de copolymères en quantité de 0,1 à 2 parties, pour 100 parties d'une matière à mouler, ces 100 parties étant comptées sans les copolymères qui servent à la stabilisation à la chaleur.

**17.** Objets moulés et produits semi-finis consistant en une matière à mouler selon les revendications 1 à 13.

**18.** Feuille consistant en une matière à mouler selon les revendications 1 à 13.